(19) Europäisches Patentamt
European Patent Office
Office européen des brevets

(11) **EP 1 959 325 A2**

(12) **EUROPÄISCHE PATENTANMELDUNG**

(43) Veröffentlichungstag:
**20.08.2008 Patentblatt 2008/34**

(51) Int Cl.:
**G05B 23/02** (2006.01)

(21) Anmeldenummer: **08000341.1**

(22) Anmeldetag: **06.07.2004**

(84) Benannte Vertragsstaaten:
**DE FR IT**

(30) Priorität: **10.07.2003 DE 10331207**

(62) Dokumentnummer(n) der früheren Anmeldung(en) nach Art. 76 EPÜ:
**04763103.1 / 1 800 196**

(71) Anmelder: **Daimler AG**
**70327 Stuttgart (DE)**

(72) Erfinder:
• **Albrecht, Volker**
**73274 Notzingen (DE)**
• **Nau, Dieter**
**73098 Rechberghausen (DE)**
• **Odermatt, Stefan**
**72379 Hechingen (DE)**

Bemerkungen:
Diese Anmeldung ist am 10-01-2008 als Teilanmeldung zu der unter INID-Code 62 erwähnten Anmeldung eingereicht worden.

(54) **Verfahren und Vorrichtung zur Reduktion einer Ausfall-Häufigkeit**

(57) Die Erfindung betrifft eine Vorrichtung und ein Verfahren zur Vorhersage der mittleren Zeitspanne zwischen zwei Ausfällen eines technischen Systems, z. B. einer Fertigungsanlage oder einer Montageanlage für Kfz-Bauteile. Die Vorrichtung umfaßt eine Bestandteile-Liste (130.1, 130.2). Diejenigen Bestandteile des technischen Systems, die in dieser Bestandteile-Liste aufgenommen sind, sind die instandhaltungs-intensiven Bestandteile. Jeder Ausfall eines Bestandteils der Liste führt zu einem Ausfall des Systems. Weiterhin umfaßt die Vorrichtung eine Einrichtung zum Erfassen von Soll-MTBF-Werten aller Bestandteile der Liste. Ein Soll-MTBF-Wert eines Bestandteils ist eine geforderte oder geplante mittlere Zeitspanne zwischen zwei Ausfällen diese Bestandteils. Die Vorrichtung sagt die geplante mittlere Zeitspanne zwischen zwei Ausfällen des technischen Systems in Abhängigkeit von den Soll-MTBF-Werten der Bestandteile vorher. Die Erfindung schafft ein Verfahren und eine Vorrichtung, um die während der gesamten Einsatzdauer eines technischen Systems auftretenden Ausfall-Häufigkeiten mit geringem Aufwand vorherzusagen.

Fig. 1

**Beschreibung**

Die Erfindung betrifft eine Vorrichtung und ein Verfahren zur Reduktion von Ausfallzeiten eines technischen Systems, z. B. einer Fertigungsanlage oder einer Montageanlage für Kfz-Bauteile.

Eine Fertigungsanlage für Kraftfahrzeug-Bauteile, z. B. für Zylinderköpfe, wird für einen geplanten Nutzungs-Zeitraum von mehreren Jahren beschafft. Ungeplante Ausfälle während des Nutzungs-Zeitraums verursachen erhebliche Kosten, die u. U. die Kosten für die Beschaffung der Fertigungsanlage deutlich übersteigen. Gewünscht werden daher Verfahren, um bereits frühzeitig, z. B. bei der Beschaffung einer Fertigungsanlage, die Häufigkeiten ungeplanter Ausfälle, die Ausfallzeiten und die aus den Ausfällen resultierenden Kosten vorhersagen zu können.

In der VDI-Richtlinie VDI 2885 werden einheitliche Daten für die Instandhaltungsplanung definiert, und ein Vorgehen zur Ermittlung von Instandhaltungskosten wird offenbart.

In DE 19848094 A1 wird ein Verfahren beschrieben, um die Auswirkungen geplanter und zufälliger Ereignisse auf die Verfügbarkeit eines technischen Systems vorherzusagen. Ein Modell des technischen Systems wird benötigt, welches das Zusammenwirken von Bestandteilen des technischen Systems widerspiegelt. Insbesondere beschreibt das Modell, wie sich der Ausfall eines Bestandteils auf das gesamte technische System auswirkt. Der zeitliche Verlauf der Systemverfügbarkeit wird mit Hilfe von Monte-Carlo-Simulationen in Abhängigkeit von einer Wartungsstrategie für das technische System vorhergesagt.

Das Aufstellen eines solchen Verfügbarkeits-Modells erfordert viel Aufwand und ist für komplexe technische Systeme, z. B. Fertigungsanlagen, oft nicht in vertretbarer Zeit durchführbar. Die Durchführung der Monte-Carlo-Simulationen setzt voraus, daß statistische Modelle für die unvorhergesehenen Ereignisse sowie Versagens-Wahrscheinlichkeiten aller Bestandteile bekannt sind sowie eine Wartungsstrategie vorgegeben ist. Diese Voraussetzungen sind gerade vor oder zu Beginn der Nutzung einer Fertigungsanlage oft nicht gegeben.

Aus EP 1160712 A2 sind eine Vorrichtung und ein Verfahren bekannt, um die Zeitpunkte von Ausfällen ("timing of a future service event") eines technischen Systems vorherzusagen. Benötigt werden wartungsrelevante Informationen, z. B. eine Zerlegung des Systems in Bestandteile, Ausfälle und deren Reparaturen in der Vergangenheit sowie Faktoren für die Wartung. Die wartungsrelevanten Informationen werden statistisch analysiert, um für die Bestandteile Zuverlässigkeitswerte, z. B. die Zeiten zwischen Ausfällen, zu ermitteln. Weiterhin werden Daten über die Leistungsfähigkeit ("performance") des Systems erfaßt, und Leistungseinbußen im laufenden Betrieb werden mit Hilfe der Informationen über Ausfälle und über die Leistungsfähigkeit ermittelt. Durch eine Simulation werden zukünftige Ausfälle vorhergesagt.

In EP 1146468 A2 werden eine Vorrichtung und ein Verfahren offenbart, um die Zeitpunkte und Kosten von Ausfällen ("service event") während des Nutzungs-Zeitraums eines technischen Systems vorherzusagen. Auch für diesen Ansatz werden die aus EP 1160712 A2 bekannten wartungsrelevante Informationen benötigt. Diese werden statistisch analysiert.

Die in EP 1160712 A2 und EP 1146468 A2 beschriebenen Ansätze erfordern ein Simulationsmodell, damit die Zeitpunkte von zukünftigen Ausfällen vorhergesagt werden können. Ein solches Simulationsmodell läßt sich oft überhaupt nicht oder nicht mit vertretbarem Aufwand erzeugen, insbesondere wenn das technische System ein komplexes dynamisches ist. Außerdem sind die benötigten Kennwerte über die Leistungsfähigkeit des Systems erst im laufenden Betrieb verfügbar, wenn die Bestandteile zusammenwirken, nicht aber vor der Inbetriebnahme.

In DE 19751273 A1 wird ein Verfahren zum Erzeugen und Handhaben einer technischen Datenbank, die während des Nutzungs-Zeitraums eines technischen Systems verfügbar ist, beschrieben. In einer einheitlichen Datenbank werden Daten über alle Komponenten des technischen Systems zum frühestmöglichen Zeitpunkt erfaßt, abgespeichert und aktualisiert. Die Datenbank wird mit Hilfe einer einheitlichen Benutzeroberfläche verwaltet. Die Datenbank läßt sich z. B. für Fehlersuchen am technischen System sowie zur Ausbildung von Wartungstechnikern verwenden.

In DE 19751273 A1 wird die Nutzung von Daten über Ausfälle am technischen System zur Fehlersuche beschrieben, aber nicht die Vorhersage von Ausfall-Häufigkeiten oder Ausfallzeiten. Im Falle eines komplexen technischen Systems kann die Datenbank darüber hinaus umfangreich werden und viele Daten erfordern, die zu einem frühen Zeitpunkt des Nutzungs-Zeitraums des Systems noch nicht zur Verfügung stehen.

Aus WO 00/72212 A2 sind ein Verfahren und eine Vorrichtung bekannt, um die Gesamtkosten ("total cost of ownership") eines komplexen Systems zu bestimmen. Das technische System ist z. B. eine Fertigungsstraße. Aus einem Informationssystem für verschiedene Disziplinen werden Informationen beschafft, die mindestens einen Aspekt des Systems betreffen, z. B. die vom System geforderte Funktion. Aus dem Informationssystem wird weiterhin Informationen über den Einsatz des Systems beschafft, z. B. die Fertigungsplanung mit einer Fertigungsstraße als dem technischen System. Aus diesen beiden Informationen werden die Gesamtkosten bestimmt.

Aus WO 01/26005 A1 ist ein Verfahren bekannt, um die Kosten während der Anschaffung und des Betriebs eines IT-Systems zu analysieren. Unterschieden werden die Kosten für Anschaffung und Installierung, für laufende Betriebskosten z. B. für Überwachung und Fehlerbeseitigung sowie indirekte Kosten. Abhängig von Charakteristiken des IT-Systems, von Benutzerprofilen und der Betriebsorganisation werden formale Schätzungs-Verfahren ("appraisal metrics") angewendet, z. B. Formeln, die Kosten in Abhängigkeiten von statistischen Kennwerten eines IT-Systems und des Betreiber-Unternehmens liefern. Die Ergebnisse werden mit etablierten Referenzwerten ("benchmarks) verglichen.

Diese Verfahren erfordern Daten, die vor der Beschaffung der Anlage nicht mit genügender Datenqualität zur Verfügung stehen. Außerdem sind die Verfahren für komplexe Anlagen schon deswegen nicht durchführbar, weil sie zu unübersichtlichen und schwer nachvollziehbaren und verifizierbaren Modellen führen.

Aus US 2001/0023376 A1 ist in Informationssystem für Bauteile bekannt. Ein Benutzer gibt eine Spezifikation für Bauteile in das Informationssystem ein. Ermittelt werden Bauteil-Typen, welche die Spezifikation erfüllen. Hierfür greift das Informationssystem auf verschiedene Verwaltungssysteme zu, z. B. eines für Teilenummern, eines für Qualitätssicherung, eines für die Verwaltung von Lagerbeständen, eines für die Steuerung von Vertrieb, eines für die Erfassung und Überwachung von Kosten, eines für die Produktionsplanung und eines für die Absatzsteuerung. Die ermittelten Bauteile werden in einer bestimmten Reihenfolge angezeigt, die z. B. von der Verwendungshäufigkeit und dem Grand der Standardisierung des jeweiligen Bauteils abhängt.

In US 2001/0023376 A1 wird nicht beschrieben, wie die Informationen über die ermittelten Bauteile oder die Reihenfolge, in der die Bauteile angezeigt werden, dafür genutzt werden, um Ausfall-Häufigkeiten oder Ausfallzeiten vorherzusagen.

Der Erfindung liegt die Aufgabe zugrunde, ein Verfahren und eine Vorrichtung zu schaffen, um die mittlere Zeitspanne zwischen zwei Ausfällen eines technischen Systems mit geringem Aufwand vorherzusagen, ohne daß hierfür ein kompliziertes Modell oder Meßdaten aus dem laufenden Betrieb des technischen Systems benötigt werden.

Die Aufgabe wird durch eine Vorrichtung nach Anspruch 1 sowie ein Verfahren nach Anspruch 8 gelöst. Vorteilhafte Ausgestaltungen werden durch die Unteransprüche festgelegt.

Die Vorrichtung umfaßt eine Bestandteile-Liste. Diejenigen Bestandteile des technischen Systems, die in dieser Liste aufgenommen sind, sind die instandhaltungs-intensiven Bestandteile. Jeder Ausfall eines Bestandteils der Liste führt zu einem Ausfall des Systems. Die in der Liste aufgelisteten Bestandteile sind quasi in Reihe geschaltet.

Weiterhin umfaßt die Vorrichtung eine Einrichtung zum Erfassen von Soll-MTBF-Werten für die Bestandteile der Bestandteile-Liste. Für jeden Bestandteil der Bestandteile-Liste wird ein Soll-MTBF-Wert erfaßt. MTBF steht für "mean time between failure". Ein MTBF-Wert eines Bestandteils ist die mittlere Zeitspanne zwischen zwei Ausfällen des Bestandteils. Der Soll-MTBF-Wert ist demnach die geforderte oder geplante mittlere Zeitspanne zwischen zwei Ausfällen des Bestandteils.

Die Erfassungs-Einrichtung umfaßt beispielsweise ein Eingabefeld eines auf einem Bildschirm gezeigten Formulars, einen Editor zum Erzeugen einer Datei im Datenformat "eXtensible Markup Language" (XML) oder eine Einrichtung zum Erfassen ("Scannen") eines papiergebundenen Formulars. In diesem Falle ist der Soll-MTBF-Wert vorgegeben. Oder die Erfassungs-Einrichtung umfaßt eine Einrichtung, die protokollierte Betriebsdaten für den Bestandteil in bereits existierenden technischen Systemen ermittelt, aus diesen einen Ist-MTBF-Wert mit statistischen Verfahren, z. B. Mittelwert-Bildung, berechnet und aus Ist-MTBF-Wert den Soll-MTBF-Wert für den Bestandteil ableitet.

Weiterhin umfaßt die Vorrichtung eine Einrichtung zum Summieren aller Kehrwerte der für die Bestandteile der Bestandteile-Liste erfaßten Soll-MTBF-Werte. Diese Einrichtung berechnet also die Summe der Kehrwerte der Soll-MTBF-Werte aller instandhaltungs-intensiven Bestandteile.

Die Vorrichtung berechnet den Kehrwert der Kehrwerte-Summe. Dieser Kehrwert ist der vorhergesagte MTBF-Wert des technischen Systems und fungiert als die vorherzusagende mittlere Zeitspanne MTBF_Sys zwischen zwei Ausfällen des technischen Systems. Die Vorrichtung bestimmt einen Wert für MTBF_Sys also gemäß der Rechenvorschrift

$$MTBF\_Sys = \frac{1}{\sum_{i=1}^{n} \frac{1}{MTBF\_i}}$$

Hierbei ist MTBF_i der erfaßte Soll-MTBF-Wert des Bestandteils Nr. i der Bestandteile-Liste.

Möglich ist aber auch, den Kehrwert der Kehrwerte-Summe mit einem Faktor kleiner als 1 zu multiplizieren. Dieser Faktor berücksichtigt pauschal Ausfälle des technischen Systems aufgrund von Ausfällen von Bestandteilen, die nicht in der Bestandteile-Liste aufgelistet sind und für die keine Soll-MTBF-Werte erfaßt werden. Beispielsweise wird MTBF_Sys gemäß der Rechenvorschrift

$$MTBF\_Sys = \frac{\beta}{\sum_{i=1}^{n} \frac{1}{MTBF\_i}}$$

Bestimmt. Der Faktor β wird aus Betriebsprotokollen bestimmt und gibt an, welcher Anteil aller Ausfälle des technischen Systems auf einen Ausfall eines Bestandteils der Bestandteile-Liste zurückgeführt wurde.

Die Erfindung liefert eine Vorrichtung und ein Verfahren, die sich auch für komplexe Systeme, z. B. Fertigungsanlagen, handhaben lassen. Denn in der Regel sind nur relativ wenige der Bestandteile instandhaltungs-intensiv. Diese Bestandteile sind in der elektronischen Bestandteile-Liste enthalten. Durch die Konzentration auf diese in der Regel wenigen instandhaltungs-intensiven Bestandteile wird eine gute Vorhersage bei deutlich geringerem Aufwand für die Erzeugung der Vorhersage bewirkt.

Der Aufwand zur Erzeugung der Vorhersage wird zum einen dadurch verringert, daß nur für relativ wenige Bestandteile, nämlich für die für die Ausfallzeiten wesentliche Bestandteile, Daten erfaßt werden. Zum anderen wird pro Bestandteil nur ein zu erfassender Wert benötigt, nämlich der Soll-MTBF-Wert des Bestandteils. Dieser Wert hat eine anschauliche Bedeutung, nämlich eine geforderte oder geplante mittlere Zeitspanne zwischen zwei Ausfällen des Bestandteils. Die Verwendung des Soll-MTBF-Wertes setzt keine statistische Annahme z. B. über eine bestimmte Wahrscheinlichkeitsverteilung von Ausfällen voraus.

Die benötigten Daten lassen sich bereits beschaffen und erfassen, bevor das technische System gebaut ist. Beispielsweise wird das Verhalten der entsprechenden Bestandteile in bereits bestehenden Anlagen überwacht und ausgewertet. Damit wird eine Vorhersage möglich, die bereits frühzeitig im "Lebenslauf" des technischen Systems zur Verfügung steht, beispielsweise nach Abschluß der Konstruktion und vor dessen Herstellung.

Ein kompliziertes Modell des Zusammenwirkens der Bestandteile des technischen Systems ist nicht erforderlich. Vielmehr ist jeder Bestandteil der Bestandteile-Liste ein solcher, dessen Ausfall ein Ausfall des technischen Systems bewirkt. Die Bestandteile der Liste sind quasi in Reihe geschaltet. Weil kein kompliziertes Modell z. B. für das Zusammenwirken der Bestandteile oder für das Zuverlässigkeits-Verhalten des Systems erforderlich ist, spart die Erfindung Zeit und Kosten für das Aufstellen und Validieren eines solchen Modells ein und vermeidet falsche Vorhersagen, die aus einem fehlerhaften Modell resultieren können.

Aus dem vorhergesagten MTBF-Wert der Anlage läßt sich die mittlere technische Verfügbarkeit der Anlage ableiten.

Die erfindungsgemäße Vorrichtung läßt sich für jedes aus Bestandteilen aufgebaute technische System verwenden, beispielsweise für

- Fertigungsanlagen für Bauteile von Fahrzeugen,

- Förder- und Verarbeitungsanlagen für den Bergbau,

- Anlagen zur Energieerzeugung, z. B. Kraftwerke,

- Anlagen zur Herstellung oder Bearbeitung von Grundstoffen der chemischen Industrie, z. B. Raffinerien oder Anlagen zur Herstellung von Lacken oder Kunststoffen,

- Fahrzeuge, z. B. Autos, Schienenfahrzeuge, Flugzeuge, Schiffe, Raumfahrzeuge,

- Telekommunikations- und Datenverarbeitungsanlagen,

- Druckmaschinen,

- Anlagen zur Herstellung von Papier, Pappe, Verpackungen,

- Anlagen zur Herstellung von Nahrungs- und Genußmitteln,

- Anlagen zur Herstellung von Arzneimitteln,

- Anlagen für Logistik, z. B. Briefverteilanlagen oder Container-Hubbrücken in Häfen oder Bahnhöfen,

- Waschmaschinen oder andere Haushaltsgeräte,

- Unterhaltungselektronik, z. B. Musikwiedergabegeräte.

Vorzugsweise wird zusätzlich zum MTBF-Wert des technischen Systems die mittlere Zeitdauer zur Fehlerbeseitigung nach einem Ausfall des technischen Systems vorhergesagt (Anspruch 2, Anspruch 9). In der Ausgestaltung nach Anspruch 2 umfaßt die Vorrichtung zusätzlich eine Einrichtung zum Erfassen von Soll-MTTR-Werten für die Bestandteile der Bestandteile-Liste.

Für jeden Bestandteil der Bestandteile-Liste wird zusätzlich ein Soll-MTTR-Wert erfaßt. MTTR steht für "mean time to repair" oder auch "mean time to restauration". Der MTTR-Wert eines Bestandteils ist die mittlere Zeitspanne zur Fehlerbeseitigung am technischen System nach einem Ausfall des Bestandteils. Der Soll-MTTR-Wert ist also die geforderte oder geplante mittlere Zeitspanne zur Fehlerbeseitigung am technischen System nach einem Ausfall des Bestandteils. Verschiedene Bestandteile können unterschiedliche MTTR-Werte und auch unterschiedliche Soll-MTTR-Werte haben.

Die Vorrichtung sagt die mittlere Zeitdauer zur Fehlerbeseitigung nach einem Ausfall des technischen Systems als gewichtetes Mittel der Soll-MTTR-Werte der Bestandteile der Bestandteile-Liste vorher. Die vorhergesagte mittlere Zeitdauer MTTR_Sys zur Fehlerbeseitigung am technischen System wird also gemäß der Rechenvorschrift

$$\text{MTTR\_Sys} = \sum_{i=1}^{n} \alpha\_i * \text{MTTR\_i}$$

bestimmt. Hierbei bezeichnen MTTR_i den erfaßten Soll-MTTR-Wert des Bestandteils Nr. i und $\alpha$_i den Gewichtungsfaktor für den Bestandteil Nr. i. Als Gewichtungsfaktoren werden die Kehrwerte der Soll-MTBF-Werte der Bestandteile verwendet. Für i=1,...,n wird also die Rechenvorschrift

$$\alpha\_i = \frac{1}{\sum_{j=1}^{n} \frac{1}{\text{MTBF\_j}}} * \frac{1}{\text{MTBF\_i}}$$

verwendet.

Insgesamt wird der MTTR-Wert des Systems gemäß der Rechenvorschrift

$$\text{MTTR\_Sys} = \frac{\sum_{i=1}^{n} \frac{\text{MTTR\_i}}{\text{MTBF\_i}}}{\sum_{j=1}^{n} \frac{1}{\text{MTBF\_j}}}$$

vorhergesagt.

In einer Fortbildung dieser Ausgestaltung (Anspruch 3) berechnet die Vorrichtung den Soll-MTTR-Wert jedes Bestandteils der Bestandteile-Liste, indem sie folgende beiden erfaßten Werte addiert, nämlich

- den Soll-MRT-Wert des Bestandteils

- und den Soll-MTD-Wert des Bestandteils.

MRT steht für "mean repair time". Der MTD-Wert eines Bestandteils ist die mittlere Reparaturzeit zur Beseitigung eines Ausfalls dieses Bestandteils. MTD steht für "mean technical delay". Der MTD-Wert eines Bestandteils ist die mittlere Zeit zur Wiederherstellung des technischen Systems nach der Beseitigung eines Ausfalls dieses Bestandteils.

Durch diese Ausgestaltung wird die Erfassung des Soll-MTTR-Wertes eines Bestandteils auf die Erfassung zweier wesentlicher Faktoren reduziert und damit besonders einfach gestaltet.

Die elektronische Bestandteile-Liste mit den instandhaltungs-intensiven Bestandteilen wird bevorzugt aus einer elektronischen Stückliste gewonnen (Anspruch 4). Diese Stückliste beschreibt eine vollständige Zerlegung des technischen Systems in seine Bestandteile. Die Stückliste umfaßt also nicht nur die instandhaltungs-intensiven, sondern auch alle anderen Bestandteile. Die Vorrichtung umfaßt weiterhin eine Einrichtung zum Kennzeichnen eines Bestandteils als instandhaltungs-intensiv, beispielsweise zum Markieren bestimmter Bestandteile der Stückliste. Die Bestandteile-Liste wird automatisch aus der Stückliste gewonnen, wobei alle als instandhaltungs-intensiv gekennzeichneten Bestandteile der Stückliste ermittelt und zu der Bestandteile-Liste zusammengestellt werden. Möglich ist, daß ein Benutzer bestimmte Bestandteile der Stückliste als instandhaltungs-intensiv kennzeichnet. Möglich ist auch, daß durch Auswertung von Betriebsprotokollen, die durch Überwachung von bereits eingesetzten technischen Systemen gewonnen wurden, ermittelt wird, welche Bestandteile besonders häufig ausfallen und/oder besonders lange Ausfallzeiten und/oder besonders hohe Kosten zur Fehlerbeseitigung verursachen. Beispielsweise wird durch Auswertung der Protokolle eine Bewertung der Bestandteile der Stückliste gewonnen - je höher die Ausfallhäufigkeit, Ausfallzeit oder Fehlerbeseitigungskosten oder eine Kombination dieser Werte sind, desto höher wird das Bestandteil bewertet. Als instandhaltungs-intensiv werden diejenigen Bestandteile gekennzeichnet, deren Bewertung eine vorgegebene Schranke übersteigt. Oder die N am höchsten bewerteten Bestandteile werden gekennzeichnet, wobei N eine vorgegebene Anzahl ist.

Gemäß Anspruch 7 ist die elektronische Stückliste für eine Kategorie technischer Systeme, welche die gleichen Funktionen ausführen, gültig. Möglich ist, aus dieser Stückliste mit der Vorrichtung nach Anspruch 5 eine Bestandteile-Liste zu erzeugen, die für diese Kategorie technischer Systeme gültig ist. Möglich ist aber auch, aus derselben Stückliste unterschiedliche Bestandteile-Listen für verschiedene technische Systeme der Kategorie zu erzeugen und hierfür die Vorrichtung nach Anspruch 5 mehrfach zu verwenden. Bevorzugt wird mit der Vorrichtung nach Anspruch 5 einmal vorab eine Bestandteile-Liste erzeugt, die für jedes System der Kategorie als Bestandteile-Liste fungiert - es sei denn, für ein System wurde eine andere Bestandteile-Liste erzeugt.

Eine Kategorie von technischen Systemen läßt sich für den Fall, daß die technischen Systeme Fertigungsanlagen sind, mit Hilfe der Einteilung von Fertigungsverfahren gemäß der DIN 8580 definieren. Beispielsweise gehören zu einer Kategorie alle Fertigungsanlagen, die ein in einer Hauptgruppe DIN 8580 definiertes Fertigungsverfahren durchführen. Möglich ist auch, eine Hauptgruppe von DIN 8580 in mehrere Kategorien zu unterteilen. Die DIN 8580 ("Einteilung Fertigungsverfahren") wird z. B. in "Dubbel - Taschenbuch für den Maschinenbau", 20. Auflage, Springer-Verlag, 2001, Kapitel S, vorgestellt. Eine Kategorie ist beispielsweise die der zerspanenden Anlagen für Kraftfahrzeug-Bauteile, eine andere die der fügenden Anlagen zur Herstellung von Kraftfahrzeug-Baugruppen.

Die Erfindung läßt sich besonders vorteilhaft auf mehrere technische Systeme einer Kategorie anwenden (Anspruch 5, Anspruch 11), beispielsweise für verschiedene Fertigungsanlagen zur Herstellung von Zylinderköpfen für Kraftfahrzeugen. Die technischen Systeme der Kategorie erfüllen dieselbe Funktion, beispielsweise die Fertigung der Zylinderköpfe in einer geforderten Stückzahl pro Monat in einer geforderten Qualität aus vorgegebenen Rohteilen. Die Erfindung liefert ein handhabbares Verfahren, um verschiedene technische Systeme der Kategorie miteinander zu vergleichen, ohne daß diese Systeme bereits im Einsatz zu sein brauchen. Erfindungsgemäß werden für jedes dieser mehreren Systeme deren jeweilige Ausfall-Häufigkeiten und Ausfallzeiten vorhergesagt. Eine Gegenüberstellung der vorhergesagten Werte wird erzeugt. Die Gegenüberstellung erlaubt es, die Systeme zu vergleichen und aus dem Vergleich technische Verbesserungsmöglichkeiten abzuleiten. Außerdem wird es möglich, konkurrierende Angebote für jeweils ein technisches System der Kategorie zu vergleichen, wenn diese Angebote Ausfall-Häufigkeiten und Ausfallzeiten umfassen.

Im folgenden wird ein Ausführungsbeispiel der Erfindung anhand der beiliegenden Zeichnungen näher beschrieben. Dabei zeigen:

Fig. 1. eine Architektur einer Ausführungsform der erfindungsgemäßen Vorrichtung;

Fig. 2. eine Architektur einer weiteren Ausführungsform der erfindungsgemäßen Vorrichtung;

Fig. 3. die Aufteilung der Belegungszeit einer Anlage;

Fig. 4. einen Verlauf der Ausfallrate $\lambda(t)$ als Funktion der verstrichenen Zeit;

Fig. 5. einen Vergleich von Soll- und Ist-MTBF-Wert einer Bauteilgruppe.

Das Ausführungsbeispiel bezieht sich auf Anlagen zur Fertigung sowie zur Montage von Kraftfahrzeug-Bauteilen, z. B. von Zylinderköpfen. Die Fertigungsanlagen und die Montageanlagen fungieren in diesem Beispiel als die technischen Systeme. Ein Hersteller von Kraftfahrzeugen oder von Kraftfahrzeug-Motoren setzt verschiedene derartige Fertigungs- und Montageanlagen ein und arbeitet damit als Anlagen-Betreiber. Derartige Anlagen werden häufig für eine geplante Lebensdauer von mindestens zehn Jahren beschafft. Wegen technischer Neuerungen und sich wandelnden Anforderungen an die gefertigten Teile unterscheiden sich die zu einem Zeitpunkt eingesetzten Anlagen voneinander.

Als eine Kategorie technischer Systeme, welche die gleichen Funktionen ausführen, fungiert in diesem Beispiel die Kategorie der Anlagen zur Fertigung von Kraftfahrzeug-Zylinderköpfen. Als eine weitere Kategorie technischer Systeme fungiert die Kategorie der Anlagen zur Montage von Kraftfahrzeug-Bauteilen.

In diesem Ausführungsbeispiel beabsichtigt der Kraftfahrzeug-Hersteller, eine neue Anlage zur Fertigung von Kraftfahrzeug-Zylinderköpfen zu beschaffen. Hierfür spezifiziert der Kraftfahrzeug-Hersteller die Anlage funktional, holt konkurrierende Angebote von Anlagen-Herstellern ein und setzt zum Vergleichen der Angebote die erfindungsgemäße Vorrichtung ein. Eine für die Kategorie gültige Stückliste 120.1 beschreibt eine vollständige Zerlegung einer Fertigungs-Anlage in Bestandteile. In dieser Stückliste 120.1 sind bestimmte Bestandteile als instandhaltungs-intensiv gekennzeichnet. Die Auflistung der gekennzeichneten Bestandteile liefert die Bestandteile-Liste.

Jedes der Angebote für eine Anlage umfaßt folgende Werte:

- für jedes instandhaltungs-intensive und daher in der Bestandteile-Liste aufgeführte Bestandteil die Angabe, wie oft der Bestandteil in einer Anlage auftritt

- den Soll-MTBF-Wert jedes instandhaltungs-intensiven Bestandteils,

- den Soll-MTTR-Wert jedes instandhaltungs-intensiven Bestandteils,

- die geplante Lebensdauer und den Wiederbeschaffungswert jedes instandhaltungs-intensiven Bestandteils,

- den zeitlichen Aufwand für die geplante Wartung jedes instandhaltungs-intensiven Bestandteils und die Kosten für die dabei benötigten Materialien.

Aus diesen Angaben ermittelt die erfindungsgemäße Vorrichtung

- eine Vorhersage für den MTBF-Wert und eine für den MTTR-Wert der im Angebot spezifizierten Anlage,

- die Kosten für den Austausch von instandhaltungs-intensiven Bestandteilen, die während der Lebensdauer der Anlage ausfallen und ersetzt werden müssen,

- den Zeitaufwand und die Kosten für die geplante Wartung der Anlage.

Die Vorrichtung erzeugt eine Gegenüberstellung aller in den Angeboten genannten Anlagen. Diese Gegenüberstellung umfaßt den vorhergesagten MTBF-Wert und den vorhergesagten MTTR-Wert jeder Anlage, die Kosten für die Wiederbeschaffung von ausgefallenen instandhaltungs-intensiven Bestandteilen jeder Anlage sowie den Zeitaufwand und die Kosten für die geplante Wartung jeder Anlage. Die Gegenüberstellung umfaßt also Zuverlässigkeits- und Kostenwerte sowie Zeitbedarfe. Sie ist ein Hilfsmittel, um die Anlagen und damit die Angebote hinsichtlich ihres Verhaltens im laufenden Betrieb vorab zu vergleichen.

Der Kraftfahrzeug-Hersteller wählt eine Anlage und damit ein Angebot aus. Mit dem Lieferanten dieser Anlage schließt er einen Vertrag ab, in dem der Soll-MTBF-Wert und der Soll-MTTR-Wert jedes instandhaltungs-intensiven Bestandteils der Anlage, die Kosten für den Austausch von instandhaltungs-intensiven Bestandteilen jeder Anlage sowie der Zeitaufwand und die Kosten für die geplante Wartung der Anlage vereinbart werden. Die vereinbarten Werte werden im laufenden Betrieb der Anlage überwacht. Falls die tatsächlichen Werte erheblich von den Soll-Werten, die vertraglich vereinbart wurden, abweichen, so werden geeignete technische Maßnahmen ergriffen, z. B. konstruktive Verbesserungen oder geänderte Einsatzbedingungen der Anlage.

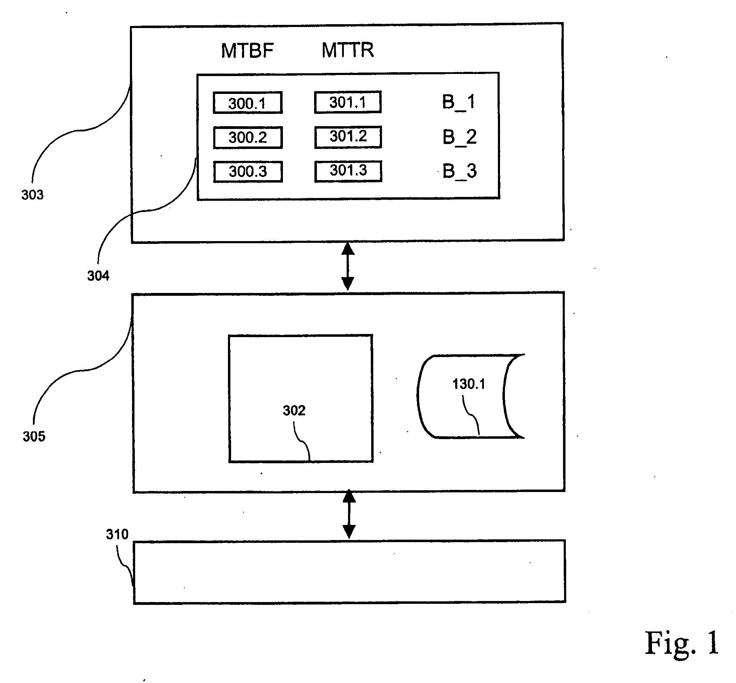

Fig. 1 zeigt eine beispielhafte Architektur der erfindungsgemäßen Vorrichtung. In diesem Beispiel ist die erfindungsgemäße Vorrichtung mit Hilfe eines Arbeitsplatz-Rechners realisiert. Die "eigentliche Datenverarbeitungseinrichtung" 305 ist mit einem Bildschirm 303 und einer Tastatur 310 verbunden. Die Vorrichtung umfaßt in dieser Ausführungsform folgende Bestandteile:

- eine elektronische Bestandteile-Liste 130.1 in Form eines Datenspeichers mit einem Datenobjekt für jeden instandhaltungs-intensiven Bestandteil,

- eine Einrichtung zum Erfassen der Soll-MTBF-Werte der Bestandteile

- und eine Einrichtung zum Berechnen der mittleren Zeitspanne zwischen zwei Ausfällen einer Anlage und zum Berechnen der mittleren Zeitdauer zur Fehlerbeseitigung nach einem Ausfall dieser Anlage.

Die Erfassungs-Einrichtung umfaßt eine Tastatur 310 sowie ein elektronisches Formular 304, das auf dem Bildschirm 303 angezeigt wird. Das Formular umfaßt pro Bestandteil der Bestandteile-Liste zwei Eingabefelder, in das ein Bearbeiter den Soll-MTBF-Wert und den Soll-MTTR-Wert des jeweiligen Bestandteils eintippt oder mit Hilfe eines Programms zur Sprachverarbeitung eingibt. Im Beispiel der Fig. 1 sind drei Soll-MTBF-Eingabefelder 300.1, 300.3, 300.3 und drei Soll-MTTR-Eingabefelder 301.1, 301.3, 301.3 für drei Bestandteile B_1, B_2, B_3 gezeigt. Rechts neben jedem Eingabefeld ist der Name des jeweiligen Bestandteils eingetragen. Das Formular 304 wird in Abhängigkeit von den Bestandteilen, die in der Bestandteile-Liste 130.1 berücksichtigt sind, automatisch erzeugt. Falls die Bestandteile-Liste 130.1 um einen Bestandteil ergänzt wird oder ein Bestandteil entfernt wird, wird das Formular daher automatisch an die Änderung angepaßt. Weiterhin umfaßt die Erfassungs-Einrichtung Mittel zum Auslesen der eingegebenen Soll-MTBF-Werte und Soll-MTTR-Werte aus den jeweiligen Eingabefeldern sowie Mittel für eine Plausibilitätsprüfung der eingegebenen Werte.

Die Auslese-Mittel übermitteln die Soll-MTBF-Werte und Soll-MTTR-Werte an eine Berechnungs-Einrichtung 302. Die Berechnungs-Einrichtung 302 berechnet die vorherzusagende mittlere Zeitspanne zwischen zwei Ausfällen der Anlage und die vorherzusagende mittlere Zeitdauer zur Fehlerbeseitigung nach einem Ausfall aus den Soll-MTBF-Werten und Soll-MTTR-Werten. Hierbei wendet die Berechnungs-Einrichtung 302 die oben angegebenen Rechenvorschriften an.

Die Berechnungs-Einrichtung 302 berechnet die beiden vorherzusagenden Werte für jede angebotene Anlage und erzeugt eine Gegenüberstellung, beispielsweise in Form einer Tabelle mit einer Zeile pro Anlage und einer Spalte pro vorherzusagendem Wert. Vorzugsweise erzeugt die Vorrichtung eine graphische Darstellung dieser Tabelle.

Die erfindungsgemäße Vorrichtung wird in einer weiteren Ausführungsform mit Hilfe eines Netzwerk-Zentralrechners 10 ("Server") und mehrerer Netzwerk-Teilnehmerrechnern 20.1, 20.2, ... ("Clients") realisiert. Die Netzwerk-Teilnehmerrechner sind durch das Internet oder ein Intranet mit dem Netzwerk-Zentralrechner 10 verbunden. Die Architektur der Vorrichtung umfaßt folgende drei Schichten:

- die Datenhaltungsschicht zur Datenhaltung,
- die Anwendungsschicht zur Ausführung der Auswertungen und Erzeugung der Gegenüberstellungen, und
- die Darstellungsschicht zur Darstellung der erzeugten Gegenüberstellungen.

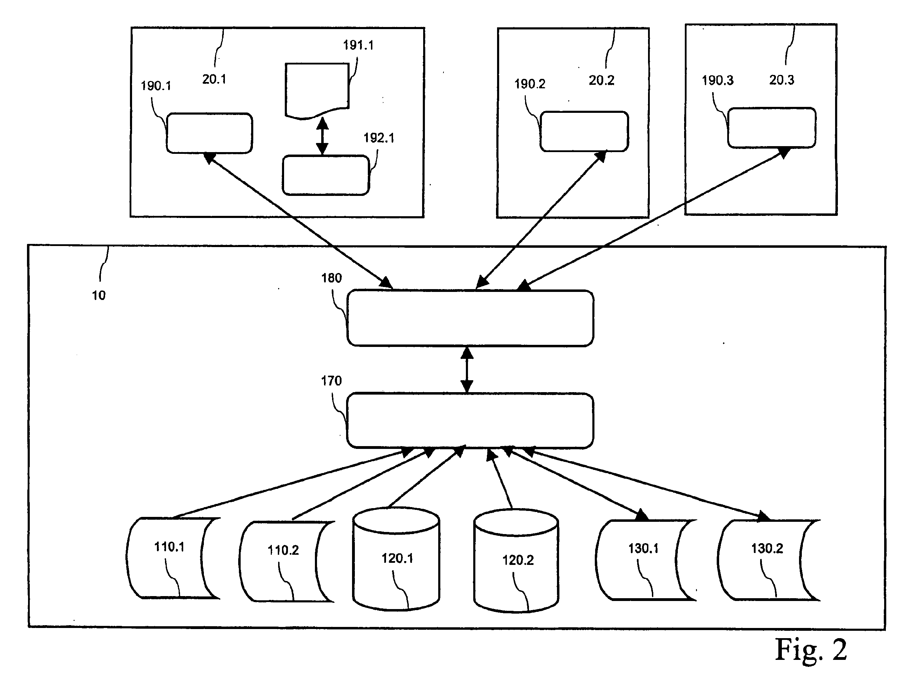

Fig. 2 zeigt die Architektur dieser Ausführungsform der erfindungsgemäßen Vorrichtung. In diesem Beispiel ist der Netzwerk-Zentralrechner 10 mit drei Netzwerk-Teilnehmerrechnern 20.1, 20.2, 20.3 verbunden. Die Pfeile in Fig. 2 stehen für Datenflüsse.

Auf dem Netzwerk-Zentralrechner 10 sind folgende Datenbanken und Software-Programme installiert:

- pro Kategorie eine elektronische Anlagen-Liste 110, die alle berücksichtigten Anlagen der Kategorie auflistet, wobei die Anlagen von verschiedenen Anlagen-Herstellern stammen können,

- pro Kategorie eine elektronische Stückliste 120, die für alle technischen Systeme einer Kategorie gültig ist und eine Zerlegung eines Systems der Kategorie in seine Bestandteile beschreibt,

- pro Kategorie eine elektronische Bestandteile-Liste 130, die die instandhaltungs-intensiven Bestandteile des technischen Systems umfaßt,

- ein Internet-Antwortprogramm 180 ("Web Server"), das Anforderungen und Anfragen, die von einem Netzwerk-Teilnehmerrechner 20.1, 20.2, ... z. B. über das Protokoll HTTP eingehen, entgegennimmt und die vom Netzwerk-Zentralrechner 10 erzeugten Antworten und Reaktionen an den anfragenden Netzwerk-Teilnehmerrechner 20.1 oder 20.2 oder 20.3 weiterleitet,

- Verknüpfungs-Software 170 ("middleware") zur Verknüpfung der Datenbanken und elektronischen Listen mit dem Internet-Antwortprogramm 180.

In diesem Beispiel sind auf dem Netzwerk-Zentralrechner 10 eine Stückliste 120.1 für die Kategorie der Fertigungs-Anlagen und eine weitere Stückliste 120.2 für Montage-Anlagen abgespeichert. Entsprechend sind eine Anlagen-Liste 110.1 für Fertigungs-Anlagen und eine weitere Anlagen-Liste 110.2 für Montage-Anlagen sowie eine Bestandteile-Liste 130.1 für Fertigungs-Anlagen und eine weitere Bestandteile-Liste 130.2 für Montage-Anlagen abgespeichert.

Unter einem Internet-Antwortprogramm 180 wird ein Programm auf dem Netzwerk-Zentralrechner 10 verstanden, das Internet-Seiten an anfragende Netzwerk-Teilnehmerrechner 20.1, 20.2, ... übermittelt. Der anfragende Netzwerk-Teilnehmerrechner hat zuvor die Anforderung mittels einer für das Internet-Antwortprogramm 180 spezifischen Internet-Adresse an das Internet-Antwortprogramm 180 übermittelt, beispielsweise indem er in einer vom Internet-Zugriffsprogramm 190 dargestellten Internet-Seite bestimmte Alternativen auswählt. Die Adresse hat die Form eines "Uniform Resource Identifier" (URI). Wie ein URI strukturiert ist, wird unter http://www.w3.org/Addressing/, abgefragt am 8. 1. 2003, beschrieben. Die Internet-Seite ist entweder statisch oder dynamisch. Eine dynamische Internet-Seite wird vom Internet-Antwortprogramm 180 erzeugt. Hierzu sendet das Internet-Antwortprogramm 180 Anfragen an eine der Datenbanken ab und verwendet die Antworten für die Erzeugung der Internet-Seite.

Die Verknüpfungs-Software 170 erlaubt es, ein Datenbanksystem durch ein anderes zu ersetzen, ohne den Rest der Vorrichtung ändern zu müssen.

Alle Netzwerk-Teilnehmerrechner 20.1, 20.2, ... sind über das Internet oder ein Intranet mit dem Netzwerk-Zentralrechner 10 verbunden. Auf dem Netzwerk-Teilnehmerrechner 20.1, der beim Kraftfahrzeug-Hersteller und damit beim Anlagen-Betreiber aufgestellt ist, sind folgende Software-Programme installiert:

- ein Internet-Zugriffsprogramm 190.1 ("Web Browser"), welches Anfragen an den Netzwerk-Zentralrechner 10 abzusenden vermag und eine vom Netzwerk-Zentralrechner 10 übermittelte Internet-Seite darzustellen vermag,

- ein Tabellenkalkulationsprogramm 191.1, das Gegenüberstellungen von Ausfall-Häufigkeiten und -zeiten in tabellarischer und graphischer Form erzeugt, und

- ein Schnittstellen-Programm 192.1, das als Informationsweiterleitungsschnittstelle zwischen den Programmen und Datenbanken auf dem Netzwerk-Zentralrechner 10 und dem Tabellenkalkulationsprogramm 191.1 auf diesem Netzwerk-Teilnehmerrechner 20.1 fungiert.

Auf den beiden Netzwerk-Teilnehmerrechnern 20.2 und 20.3, der bei zwei Herstellern von Anlagen der Kategorie aufgestellt ist, sind folgende Software-Programme installiert:

- ein Internet-Zugriffsprogramm 190.2 bzw. 190.3 ("Web Browser"), welches Anfragen an den Netzwerk-Zentralrechner 10 abzusenden vermag und eine vom Netzwerk-Zentralrechner 10 übermittelte Internet-Seite darzustellen vermag,

Die Bestandteile-Listen und die Stücklisten sind z. B. eine hierarchische, relationale, objektorientierte oder objektrelationale Datenbank, eine Menge von XML-Dateien, ein Dateiverwaltungssystem mit Dateien oder auch eine unstrukturierte Datenablage verbunden mit einem semantischen Netz und einer Suchmaschine abgespeichert. Die in der Datenbank gespeicherten Daten können z. B. auf einem permanenten Speicher einer Datenverarbeitungseinrichtung oder einem tragbaren Datenspeichermedium, z. B. einer CD-ROM, abgespeichert sein.

Die erfindungsgemäße Vorrichtung umfaßt für jede Kategorie eine baumartige elektronische Stückliste 120. Die Wurzel der Stückliste repräsentiert die gesamte Anlage, die weiteren Knoten die Bestandteile. Ein Knoten für einen Bestandteil A ist Nachfolger eines Knotens für einen Bestandteil B, wenn A ein Teil von B ist. In der Stückliste ist jeder Bestandteil der Anlage durch einen Knoten repräsentiert, auch die nicht instandhaltungs-intensiven Bestandteile.

Wie oben beschrieben, werden in diesem Ausführungsbeispiel zwei Kategorien unterschieden. Daher umfaßt die Vorrichtung zwei elektronische Stücklisten 120.1, 120.2. Die Stückliste 120.1 beschreibt eine Zerlegung einer Anlage zur Fertigung von Kraftfahrzeug-Zylinderköpfe in seine Bestandteile und ist für jede Anlage dieser Kategorie gültig. Die gedankliche Zerlegung einer Anlage ist vorzugsweise eine funktionale Zerlegung, also eine in Funktions-Bestandteile. Ein Funktions-Bestandteil kann in verschiedenen Anlagen der Kategorie durch unterschiedliche physikalische Bestandteile realisiert sein.

Die Stückliste 120.1, die für die Kategorie der Anlagen zur Fertigung von Zylinderköpfen gültig ist, ist in folgende vier Detaillierungsebenen unterteilt, nämlich:

- Produktionssystem (gesamte Anlage)

- Teilsysteme

- Funktionsgruppen

- Bauteilgruppen.

Die gesamte Fertigungs-Anlage besteht aus Teilsystemen. Ein Teilsystem besteht aus Funktionsgruppen. Eine Funktionsgruppe besteht aus Bauteilgruppen.

Zu den Teilsystemen einer Fertigungs-Anlage gehören:

- Fördertechnik,

- Zylinderkopf-Bearbeitung,

- Installationstechnik und Peripherie,

- Rechentechnik.

Zu den Funktionsgruppen des Teilsystems "Zylinderkopf-Bearbeitung" gehören die Funktionsgruppen:

- Linearachse / Rotationsachse,

- Arbeitsspindel,

- Hydrostatik,

- Werkzeugwechselsystem,

- Arbeitsraum,

- Schmiersystem,

- Meßtechnik / Meßsteuerung,

- Werkstückaufspannung,

- Palettenwechsler.

Zu den Bauteilgruppen der Funktionsgruppe "Arbeitsspindel" gehören die Bauteilgruppen:

- Antrieb,

- Lagerung,

- Aufspannelement / Klemmvorrichtung,

- Kühlung,

- Drehdurchführung,

- Schmierung,

- Sensorik,

- Werkzeugspannung,

- Werkzeugbruchkontrolle,

- Wuchtsystem,

- Meßsystem,

- Zusatzfunktionen.

Zu den Bauteilgruppen der Funktionsgruppe "Meßtechnik / Meßsteuerung" gehören die Bauteilgruppen:

- Meßwertaufnehmer,

- Antrieb,

- Führung,

- Lagerung,

- Kalibriereinrichtung,

- bewegte Peripherie,

- Zusatzfunktionen.

Auch die Stückliste 120.2, die für die weitere Kategorie gültig ist, umfaßt die oben aufgelisteten vier Detaillierungsebenen. Eine Montage-Anlage umfaßt die Teilsysteme:

- eigentliche Montage

- Fördertechnik

- rechentechnische Anbindung

- Installationstechnik und Peripherie

- Schraubtechnik

- Robotertechnik

- speicherprogrammierbare Steuerung.

Das Teilsystem "eigentliche Montage" besteht aus den Funktionsgruppen:

- Linearachse,

- Zuführtechnik,

- Ausheber mit / ohne Indexierung,

- Schutzeinrichtungen,

- Einpreßtechnik,

- Greifer,

- Beölung,

- Beschriftung,

- Verschiebeeinrichtung,

- Wendestation,

- Hubstation,

- Kippstation,

- Drehstation.

Bemerkung: Die Funktionsgruppe "Beschriftung" beschriftet die montierten Kfz-Bauteile. Gemeint ist also nicht eine Beschriftung der Montage-Anlage selber.
Die Funktionsgruppe "Linearachse" umfaßt die Bauteilgruppen:

- bewegte Peripherie,

- Führung,

- Zusatzfunktionen,

- Antrieb,

- Kugelrollspindel.

Bauteilgruppen gleichen Namens können in verschiedenen Funktionsgruppen auftreten, z. B. umfaßt sowohl die Funktionsgruppe "Arbeitsspindel" als auch die Funktionsgruppe "Meßtechnik / Meßsteuerung" je eine Bauteilgruppe "Antrieb". Die Unterteilung bis auf die Ebene der Bauteilgruppen führt zu einer eindeutigen, für alle Anlagen der Kategorie gültige Definition, die festlegt, wie die Funktionsgruppen und Teilsysteme abgegrenzt sind.

Weil die gedankliche Zerlegung der Anlage, die zur Stückliste 120.1 führt, funktional und generisch ist, sind für einen funktionalen Bestandteil verschiedene technische Realisierungen möglich. Beispielsweise kann die Bauteilgruppe / Meßwertaufnehmer durch mindestens einen Meßtaster, mindestens einen Meßdorn oder mindestens einen sonstigen Meßwertaufnehmer realisiert sein. Dadurch braucht die Stückliste 120.1 nicht bei jeder technologischen Neuerung angepaßt zu werden, sondern nur bei funktionalen Änderungen. Das entsprechende gilt für die weitere Stückliste 120.2.

Falls eine Anlage mehrere baugleiche Bestandteile besitzt, so wird in der Stückliste dieser Bestandteil nur einmal aufgeführt. Falls beispielsweise eine Anlage zur Herstellung von Zylinderköpfen stets fünf Linearachsen oder aber zwischen drei und sechs Linearachsen besitzt, ist in der Stückliste 120.1 für diese Kategorie nur eine Linearachse aufgeführt. Damit ist die Stückliste für jede Anlage der Kategorie gültig, unabhängig von der Anzahl der jeweils vorhandenen Linearachsen.

Der Netzwerk-Teilnehmerrechner 20.1 beim Anlagen-Betreiber ermöglicht es einem Benutzer, der die entsprechenden Berechtigungen besitzt, auf die Stücklisten 120.1, 120.2 zuzugreifen und sie sich mit Hilfe des Internet-Zugriffsprogramms 190.1 anzeigen zu lassen. Der Benutzer hat weiterhin die Möglichkeit, mit Hilfe des Internet-Zugriffsprogramms 190.1 die Stücklisten 120.1 und 120.2 zu ändern und zu erweitern, z. B. durch Hinzufügen, durch Kopieren oder durch Löschen von Bestandteilen einer Anlage oder durch "Umhängen" von Bestandteilen in der jeweiligen Stückliste. Durch das Umhängen wird ein Bestandteil an eine andere Stelle der baumartigen Zerlegung verschoben.

Weiterhin versetzt das Internet-Zugriffsprogramms 190.1 einen Benutzer in die Lage, bestimmte in der Stückliste 120.1 oder Stückliste 120.2 berücksichtigen Bestandteile einer Anlage als instandhaltungs-intensiv zu kennzeichnen. Hierfür wählt der Benutzer bestimmte Bestandteile der Stückliste aus und kennzeichnet sie als instandhaltungs-intensiv. Jeder als instandhaltungs-intensiv gekennzeichnete Bestandteil führt zu einem Ausfall der gesamten Anlage.

Automatisch wird auf Knopfdruck ermittelt, welche Bestandteile der Stückliste dergestalt gekennzeichnet sind. Diese Bestandteile werden in eine Bestandteile-Liste aufgenommen. Beispielsweise werden folgende Funktionsgruppen in der Stückliste 120.2 für Montage-Anlagen als instandhaltungs-intensiv gekennzeichnet:

- Linearachse (Pneumatikzylinder),

- Linearachse (NC-Antrieb),

- Beschriftung,

- Transportelemente,

- Drehstation,

- Werkstückträger.

In diesem Beispiel kann eine Linearachse auf zwei unterschiedliche Weisen realisiert sein, nämlich mit Pneumatikzylinder oder mit NC-Antrieb. Eine Anlage kann eine oder mehrere Linearachsen mit Pneumatikzylinder oder eine oder mehrere Linearachsen mit NC-Antrieb haben.

Weiterhin werden bevorzugt in jeder als instandhaltungs-intensiv gekennzeichneten Funktionsgruppe einzelne Bauteilgruppen dieser Funktionsgruppe als instandhaltungs-intensiv gekennzeichnet. In der Bestandteile-Liste sind Kennungen der instandhaltungs-intensiven Funktionsgruppen und der instandhaltungs-intensiven Bauteilgruppen sowie Festlegungen, welche dieser Bauteilgruppen zu welchen dieser Funktionsgruppen gehören, abgespeichert.

Möglich ist, in derselben Stückliste für verschiedene Anlagen einer Kategorie unterschiedliche Bestandteile als instandhaltungs-intensiv zu kennzeichnen. Beispielsweise ist für eine Anlage die Linearachse (NC-Antrieb) instandhaltungs-intensiv, für eine andere eine Bettbahn-Führung. Dadurch entstehen unterschiedliche Bestandteile-Listen 130 für verschiedene Anlagen derselben Kategorie.

Die erfindungsgemäße Vorrichtung sagt die mittleren Zeitspanne zwischen zwei Ausfällen eines technischen Systems vorher. Im folgenden werden einige Begriffe definiert, die mit Ausfall in Zusammenhang stehen.

In Übereinstimmung mit DIN 31 051 wird unter einem Ausfall, auch Fehler genannt, ein Ereignis verstanden, bei dem mindestens ein Bestandteil eines technischen Systems nicht bereit ist, Teile nach spezifizierten Bedingungen wie geplant zu produzieren, oder nicht fähig ist, entsprechend der Spezifikation geplante Operationen zu verrichten. Jeder Ausfall führt zu einem unplanmäßigen Stop des Systems und erfordert einen Eingriff. Ausgenommen sind nicht maschinenspezifische Ausfälle z.B. Bedienfehler.

Die gesamte Belegungszeit ($T_b$) eines technischen Systems, z. B. einer Fertigungsanlage, unterteilt sich in Anlehnung an die VDI-Richtlinie 3423 in folgende Zeiten:

- Nutzungszeit ($T_n$) = Netto-Produktionszeit als die Summe derjenigen Zeitspannen, in der die Anlage ihre geplante Funktion uneingeschränkt erfüllt und mit vollem Leistungsvermögen die geforderte Anzahl von fehlerfreien Kfz-Bauteilen produziert

- geplante Stillstandszeit ($T_s$),

- technische Ausfallzeit ($T_t$).

Die geplante Stillstandszeit setzt sich zusammen aus:

- Wartungszeit ($T_w$),

- organisatorische Ausfallzeit ($T_o$).

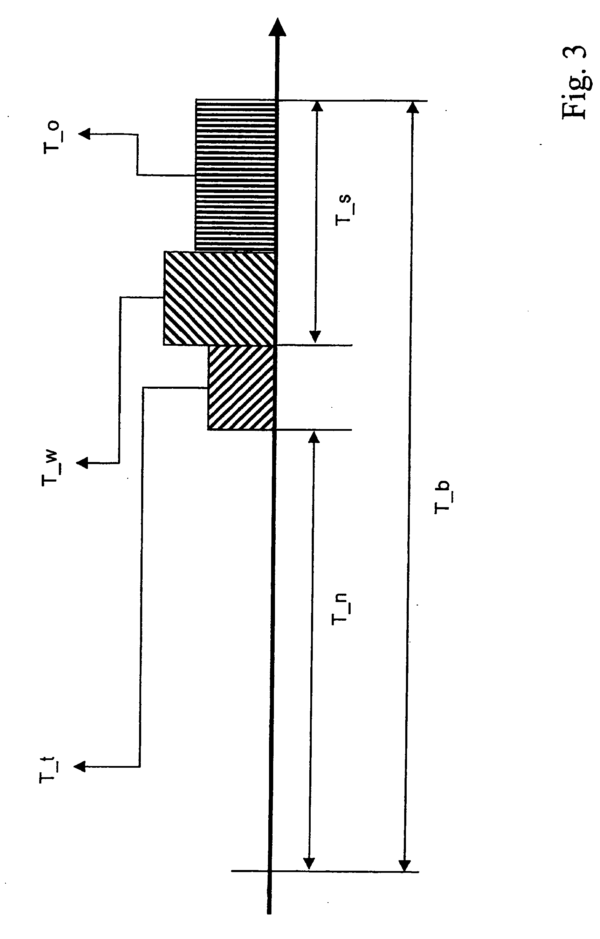

Fig. 3 veranschaulicht die Aufteilung der Belegungszeit einer Anlage.

Die Wartungszeit ist für die Durchführung von Arbeiten vorgesehen, die gemäß eines Wartungsplans und in der Regel unabhängig von Ausfällen der Anlage durchgeführt werden. Hierzu gehören die geplante Instandhaltung sowie Pflege der Anlage (z. B. Schmieren, Reinigen). Die organisatorische Ausfallzeit resultiert aus der Vorbereitung von Produktionsvorgängen oder aus organisatorischen Mängeln. In die organisatorische Ausfallzeit fließen z. B. Zeiten ein, die durch Werkzeugwechsel, Besprechungen, Pausen, Zeiten für Sicherheitsbelehrungen oder das Fehlen von Werkstücken oder Energie verursacht sind. Unter "Wartungszeit" wird die gemäß einem Wartungsplan Zeit für geplante Wartungen und Instandhaltungen an der Anlage verstanden. Für die "Wartungszeit" und die "organisatorische Ausfallzeit" ist der Anlagenbetreiber verantwortlich. Technische Ausfallzeiten resultieren aus ungeplanten Ausfällen von Bestandteilen der Anlage und führen zu ungeplanten Stillstandszeiten. Vorzugsweise werden nur solche technische Ausfallzeiten berücksichtigt, für die der Anlagen-Hersteller verantwortlich ist. Ursachen derartiger Ausfälle sind Mängel in der Konzeption oder der Ausführung der Anlage, z. B. Ausfälle von Material, Mängel der Anlagen-Konstruktion, nicht ausgereifte Technologie, Fehler der Fertigung und Montage, der Dokumentation.

Unter der Ausfallrate $\lambda(t)$ wird in Übereinstimmung mit

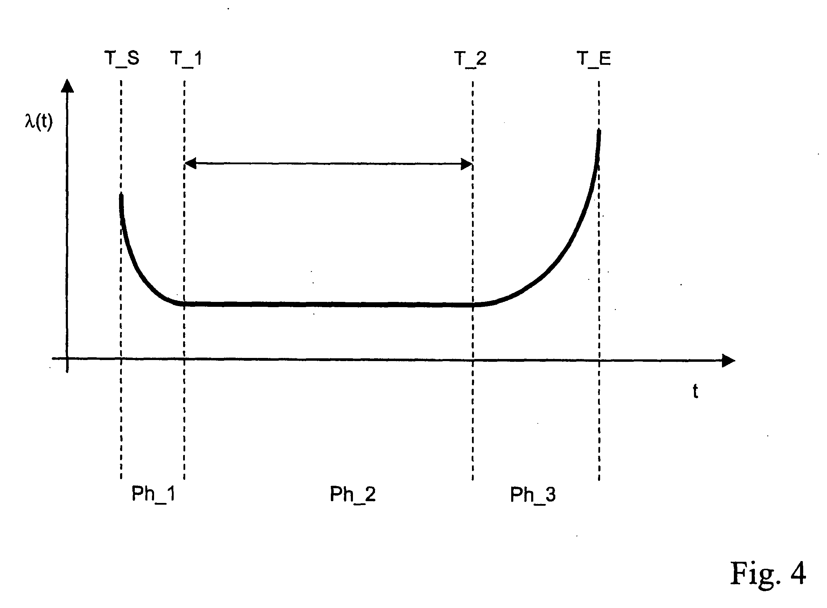

DIN 40041 und EN 61703 die Anzahl der Ausfälle pro Zeiteinheit verstanden. Hierbei bezeichnet t die seit Inbetriebnahme der Anlage verstrichene Zeit. Fig. 4 zeigt einen typischen Verlauf der Ausfallrate $\lambda(t)$ als Funktion der verstrichenen Zeit. Dieser Verlauf wird oft als "Badewannenkurve" bezeichnet. $T_S$ bezeichnet den Zeitpunkt der Inbetriebnahme, $T_E$ den der Außerdienststellung der Anlage. Drei verschiedene Phasen im "Lebenslauf" der Anlage, das ist der Zeitraum zwischen $T_S$ und $T_E$, lassen sich unterscheiden:

- die Phase $Ph_1$ der Frühausfälle ("Kinderkrankheiten") der Anlage,

- die Phase $Ph_2$ der Zufallsausfälle,

- die Phase $Ph_3$ der Verschleißausfälle.

In der Phase $Ph_1$ der Frühausfälle fällt die Ausfallrate $\lambda(t)$. Die Schadensursachen sind überwiegend auf Fehler des Anlagen-Herstellers zurückzuführen. Typische Beispiele sind Fehler beim Werkstoff, Montage und Fertigung, Konstruktionsfehler, nicht ausgereifte Technologien.

In der Phase $Ph_3$ der Verschleißausfälle steigt die Ausfallrate $\lambda(t)$. Die Anlage ist am Ende seines Lebenslaufs angelangt. Ausfälle resultieren beispielsweise aus Alterung, Abnutzung, Ermüdung.

Vorzugsweise wird die Belegungszeit in die Phase $Ph_2$ der Zufallsausfälle gelegt. In Fig. 4 sind der Anfangs-Zeitpunkt T_1 und der End-Zeitpunkt T_2 dieser Phase Ph_2 eingetragen. In dieser Zeit läßt sich das Ausfallverhalten der Anlage mit einer Exponentialverteilung beschreiben, und die Ausfallrate $\lambda(t)$ ist zeitlich konstant und wird abkürzend mit $\lambda$ bezeichnet. Ausfälle in der Phase Ph_2 resultieren z. B. aus Fehlbedienungen, falsche Umgebungsbedingungen (Feuchte, Vibrationen, Spannungsspitzen), Nichtbeachtung von Wartungsintervallen.

Der MTBF-Wert einer Anlage gibt die durchschnittliche Zeitspanne zwischen zwei Ausfällen der Anlage an. Entsprechend gibt der MTBF-Wert eines Bestandteils die durchschnittliche Zeitspanne zwischen zwei Ausfällen des Bestandteils an. Der MTBF-Wert läßt sich als Quotient aus

- der gesamten Belegungszeit der Anlage bzw. des Bestandteils

- und der Anzahl der Ausfälle während dieser Belegungszeit bestimmen.

Falls T_b die oben definierte Belegungszeit und n die Anzahl der Ausfälle bezeichnet, so gilt:

```
MTBF = T_b / n
```

Falls die Ausfallrate $\lambda(t)$ als zeitlich konstant angenommen wird, so gilt:

```
MTBF = 1/λ und λ = 1/ MTBF = n / T_b
```

Die durchschnittliche Zeitdauer, in der die Anlage bzw. ein Bestandteil einwandfrei arbeitet, wird als "mean time to failure" (MTTF) bezeichnet. Der MTTF-Wert läßt sich als Quotient aus

- der Summe der Nutzungszeiten (= Netto-Produktionszeiten) der Anlage bzw. des Bestandteils

- und der Anzahl der Ausfälle während dieser Belegungszeit bestimmen.

Falls T_n die Summe der oben definierten Nutzungszeiten und n die Anzahl der Ausfälle bezeichnet, so gilt:

```
MTBF = T_n / n
```

Der MTTR-Wert der Anlage ist die durchschnittlich Zeitdauer, die nach einem Ausfall zum Reparieren benötigt wird. Der MTTR-Wert eines Bestandteils ist die durchschnittlich Zeitdauer, die dann nach einem Ausfall zum Reparieren benötigt wird, wenn der Bestandteil ausgefallen ist. Der MTTR-Wert läßt sich als Quotient aus

- der Summe der technischen Ausfallzeiten der Anlage bzw. des Bestandteils

- und der Anzahl der Ausfälle während dieser Belegungszeit bestimmen.

Falls T_t die Summe der oben definierten technischen Ausfallzeit und n die Anzahl der Ausfälle der Anlage bezeichnet, so gilt:

```
MTTR = T_t / n
```

Weiterhin gilt: MTBF = MTTR + MTTF.

Der MTTR-Wert, also die mittlere Zeitspanne zur Reparatur, setzt sich gemäß EN 61703 / 2002 aus folgenden einzelnen Zeitspannen zusammen:

- die "mittlere administrative Verzugsdauer" ("mean administrative delay", MAD), in welche die Reaktionszeit des Instandhaltungs-Personals und die Zeit für die Fehlersuche (Analyse, Diagnose, Entscheidung über Reparatur) einfließen,

- die "mittlere logistische Verzugsdauer" ("mean logistic delay", MLD) als die Zeit zur Beschaffung oder Herbeibringen benötigter Ersatzteile,

- die "mittlere Reparaturdauer" ("mean repair time", MRT) als Zeit für die eigentliche Reparatur,

- die "mittlere technische Verzugsdauer" ("mean technical delay", MTD) als Zeitspanne zwischen dem Ende der reinen Reparaturzeit bis zur wiedererlangten Betriebsbereitschaft der Anlage.

Während der eigentlichen Reparatur wird z. B. ein Zugang zum fehlerverursachenden Teil geschaffen, das Teil ausgebaut und ein neues eingebaut oder das Teil repariert und wieder eingebaut. Während der mittleren technischen Verzugsdauer wird die Anlage wiederhergestellt, wobei sie z. B. eingerichtet, eingestellt, warmgelaufen und getestet wird, und wieder hochgefahren.

Vorzugsweise wird die Berechnung der mittleren Zeitspanne zur Reparatur vereinfacht, indem diese als Summe aus

- der mittleren Reparaturdauer (MRT-Wert)

- und der mittleren technischen Verzugsdauer (MTD-Wert)

berechnet wird.

Im folgenden wird eine Ausführungsform beschrieben, wie die erfindungsgemäße Vorrichtung Daten erfaßt und aufgrund dieser Daten die vorherzusagenden Werte bestimmt. Das folgende Beispiel bezieht sich auf die Situation, daß ein Hersteller von Kraftfahrzeugen eine neue Anlage zur Fertigung von Zylinderköpfen beschaffen will. Der Kraftfahrzeug-Hersteller spezifiziert die zu beschaffende Anlage, und verschiedene Anlagen-Hersteller unterbreiten ihm konkurrierende Angebote für je eine Anlage gemäß der Spezifikation.

Auf dem Netzwerk-Teilnehmerrechner 20.1 beim Anlagenbetreiber erzeugt das Internet-Zugriffsprogramm 190.1 ein elektronisches Formular, in das ein Benutzer des Anlagen-Betreibers, beispielsweise ein Wartungsingenieur für Anlagen, Festlegungen trifft.

Das Formular ist in einer bevorzugten Ausführungsform in vier Bereiche unterteilt:

- In den Bereich "Verwaltungsdaten" wird eine Kennung für die Ausschreibung, z. B. ein Projektname und eine Anfragenummer, sowie der späteste Termin zur Abgabe eines Angebots, eingetragen. Eine Kategorie von Anlagen wird festgelegt, und eine Spezifikation, z. B. ein Lastenheft, für die Anlage wird mit den Verwaltungsdaten verknüpft. Durch die Auswahl einer Kategorie sind eine Stückliste 120.1 und eine Bestandteile-Liste 130.1 mit den als instandhaltungs-intensiv gekennzeichneten Bestandteilen der Anlage festgelegt. Weiterhin trägt der Bearbeiter den Namen und weitere Angaben eines Ansprechpartners beim Anlagen-Betreiber ein.

- In den Bereich "Anlagendaten" trägt der Benutzer, vorzugsweise ein Mitarbeiter des Anlagenbetreibers, u. a. folgende Angaben ein:

- die Kategorie, zu der die Anlage gehört, z. B. Fertigungs-Anlage für Zylinderköpfe,

- die geplante Lebensdauer der Anlage, z. B. 10 Jahre,

- die geplante Stückzahl von Zylinderköpfen, die auf dieser Anlage pro Zeiteinheit gefertigt werden sollen, z. B. Stückzahl pro Jahr,

- die geplante Produktionszeit z. B. in Stunden pro Jahr,

- das Schichtmodell, die Schichtdauer und die Arbeitstage während der Nutzung der Anlage.

Die Angaben, die der Bearbeiter beim Anlagen-Betreiber trifft, werden verschiedenen Anlagen-Herstellern zur Verfügung gestellt, damit diese Angebote abgeben können. Im folgenden Beispiel gehören hierzu zwei Anlagen-Hersteller, die über die beiden Netzwerk-Teilnehmerrechner 20.2 und 20.3 Zugriff auf die Ausschreibung haben.

Auf den beiden Netzwerk-Teilnehmerrechnern 20.2 und 20.3 erzeugt das Internet-Zugriffsprogramm 190.2 bzw. 190.3 ein elektronisches Formular, in das ein Benutzer des Anlagen-Herstellers, beispielsweise ein Konstrukteur einer Anlage, Werte einträgt.

Das Formular für den Anlagen-Hersteller ist in einer bevorzugten Ausführungsform in folgende Bereiche unterteilt:

- In den Bereich "Verwaltungsdaten" kann der Benutzer sich die vom Anlagen-Betreiber vorgegebenen Verwaltungsdaten, z. B. Kennung für die Ausschreibung und Bestandteile-Liste, betrachten, ohne Änderungen vornehmen zu können. Der Benutzer des Anlagen-Herstellers ergänzt eine Kennung für sein Angebot, z. B. eine Angebotsnummer, und Verwaltungs-Informationen, z. B. Name des Anlagen-Herstellers und des Ansprechpartners für dieses Angebot.

- Auf den Bereich "Anlagendaten" hat der Bearbeiter des Anlagen-Herstellers nur lesenden Zugriff, und zwar auf die oben beschriebenen Daten.

- Für jeden instandhaltungs-intensiven Bestandteil werden zwei Formularbereiche "Wartungsdaten" und "Ausfalldaten" erzeugt.

Der Formularbereich "Wartungsdaten" für eine Bauteilgruppe B_i hat folgende Eingabefelder:

- ein Eingabefeld für die Anzahl der gleichartigen Bauteilgruppen B_i in der übergeordneten Funktionsgruppe,

- In einem Eingabefeld läßt sich der zeitliche Aufwand für geplante Instandhaltungsmaßnahmen, also für Maßnamen, die in der Wartungszeit T_w an einem Exemplar der Bauteilgruppe B_i durchgeführt werden, z. B. geplante Instandhaltung, Inspektion und Reinigung. Diese Aufwände werden z. B. in Stunden pro Jahr angegeben.

- In einem weiteren Eingabefeld werden die geplanten Kosten für Bauteile eingetragen, die in der Zeiteinheit für die in der Wartungszeit T_w durchgeführten Maßnahmen an der Bauteilgruppe B_i benötigt werden, z. B. technisch notwendige Bauteile zur Betriebserhaltung.

- In einem weiteren Eingabefeld werden die geplanten Kosten für Verbrauchsstoffe eingetragen, die für die geplante Instandhaltung insgesamt verbraucht werden, z. B. Schmieröl.

Der Formularbereich "Ausfalldaten" für eine Bauteilgruppe B_i hat folgende Eingabe- und Ausgabefelder:

- ein Eingabefeld für den Soll-MTBF-Wert der Bauteilgruppe B_i,

- zwei Eingabefelder für den Soll-MRT-Wert und für den Soll-MTD-Wert der Bauteilgruppe B_i sowie ein Ausgabefeld für den daraus berechneten Soll-MTTR-Wert der Bauteilgruppe B_i,

- ein Eingabefeld für die geplanten Kosten zur Wiederbeschaffung der Bauteilgruppe B_i,

- ein Eingabefeld für die geplante Lebensdauer der Bauteilgruppe B_i,

Der Formularbereich "Wartungsdaten" für eine Funktionsgruppe F_j hat folgende Eingabe- und Ausgabefelder:

- ein Eingabefeld für die Anzahl der gleichartigen Funktionsgruppen F_j in einer Anlage,

- ein Ausgabefeld für den zeitlichen Aufwand für geplante Instandhaltungsmaßnahmen an der Funktionsgruppe F_j, der wie unten beschrieben aus zeitlichen Aufwände für geplante Instandhaltungsmaßnahmen an den Bauteilgruppen der Funktionsgruppe F_j berechnet wird,

- ein Ausgabefeld für die geplanten Kosten für Bauteile, die für die in der Wartungszeit T_w durchgeführten Maßnahmen an der Funktionsgruppe F_j benötigt werden,

- ein Ausgabefeld für die geplanten Kosten für Verbrauchsstoffe, die für die in der Wartungszeit T_w durchgeführten Maßnahmen an der Funktionsgruppe F_j benötigt werden,

Der Formularbereich "Ausfalldaten" für eine Funktionsgruppe F_j hat folgende Eingabe- und Ausgabefelder:

- ein Ausgabefeld für den Soll-MTBF-Wert der Funktionsgruppe F_j, der gemäß einer unten angegebenen Rechenvorschrift aus den Soll-MTBF-Werten der instandhaltungs-intensiven Bauteilgruppen der Funktionsgruppe F_j berechnet werden,

- ein Ausgabefeld für den Soll-MTTR-Wert der Funktionsgruppe F_j, der gemäß einer unten angegebenen Rechenvorschrift aus den Soll-MTTR-Werten der instandhaltungs-intensiven Bauteilgruppen der Funktionsgruppe F_j berechnet werden,

- ein Eingabefeld für die geplanten Kosten zur Wiederbeschaffung der kompletten Funktionsgruppe F_j,

- ein Eingabefeld für die geplante Lebensdauer der Funktionsgruppe F_j,

Die Daten, die in die Eingabefelder gesandt werden, werden vom jeweiligen Netzwerk-Teilnehmerrechner 20.1 oder 20.2 oder 20.3 an den Netzwerk-Zentralrechner 10 gesandt. Die Berechnungen werden vorzugsweise auf dem Netzwerk-Zentralrechner 10 ausgeführt, und zwar z. B. mit Hilfe des Internet-Antwortprogramms 180. Diese Ausgestaltung ermöglicht es, möglichst wenige Programme dezentral auf den Netzwerk-Teilnehmerrechnern 20.1, 20.2, 20.3 verfügbar zu halten und möglichst viele Berechnungen zentral ausführen zu lassen.

Möglich ist auch, daß die Vorrichtung die Daten nicht mit Hilfe von Formularen eines Internet-Zugriffsprogramms 190.2 bzw. 190.3 erfaßt, sondern mit Hilfe einer elektronischen Tabelle eines nicht dargestellten Tabellenkalkulations-Programms, in das die Benutzer die benötigten Werte eintragen und das Berechnungen durchführt. Beispielsweise ist auf jedem der drei Netzwerk-Teilnehmerrechner 20.1, 20.2, 20.3 ein solches Tabellenkalkulations-Programm lokal installiert und führt dort die Berechnungen durch.

Die Ausfallhäufigkeiten und Ausfallzeiten werden für die Entscheidung zugunsten eines Angebots herangezogen. Ein Angebot eines Anlagen-Herstellers kann sich auf eine Anlage beziehen, die bereits im Einsatz ist. Es kann sich aber auch auf eine Anlage beziehen, die noch gar nicht hergestellt ist, sondern z. B. erst aufgrund der Spezifikation konstruiert wird.

Die erfindungsgemäße Vorrichtung bestimmt wie folgt den vorherzusagenden MTBF-Wert und den vorherzusagenden MTTR-Wert einer Anlage aus den Soll-MTBF-Werten und den Soll-MTTR-Werten von Bestandteilen: Seien $B\_1, \ldots, B\_n$ die unterschiedlichen instandhaltungs-intensiven Bestandteile eines Systems. Diese Bestandteile sind in der elektronischen Bestandteile-Liste aufgelistet. Seien $N\_1, \ldots, N\_n$ die Anzahlen, in der die Bestandteile $B\_1, \ldots, B\_n$ jeweils im System vorkommen. Das System umfaßt also $N\_1$ gleichartige Bestandteile $B\_1$, $N\_2$ gleichartige Bestandteile $B\_2$ und so fort. Die Festlegung der Bestandteile ist für die Kategorie der Anlagen zur Fertigung von Zylinderköpfen und damit für alle angebotenen Anlagen gültig. Der Ausfall eines dieser Bestandteile führt zum Ausfall der Anlage. Die instandhaltungs-intensiven Bestandteile sind quasi in Reihe geschaltet.

Seien $MTBF\_B\_1, \ldots, MTBF\_B\_n$ die Soll-MTBF-Werte und $MTTR\_B\_1, \ldots, MTTR\_B\_n$ die Soll-MTTR-Werte der n instandhaltungs-intensiven unterschiedlichen Bestandteile eines technischen Systems. Dann werden der vorherzusagende MTBF-Wert MTBF_Sys und der vorherzusagende MTTR-Wert MTTR_Sys gemäß folgender Vorschrift berechnet:

$$MTBF\_Sys = \frac{1}{\lambda\_Sys} = \frac{1}{\sum_{i=1}^{n} N\_i * \lambda\_i} = \frac{1}{\sum_{i=1}^{n} \frac{N\_i}{MTBF\_B\_i}}$$

und

$$MTTR\_Sys = \frac{\sum_{i=1}^{n} N\_i * \lambda\_i * MTTR\_B\_i}{\sum_{i=1}^{n} N\_i * \lambda\_i} = \frac{\sum_{i=1}^{n} N\_i * \frac{MTTR\_B\_i}{MTBF\_B\_i}}{\sum_{i=1}^{n} \frac{N\_i}{MTBF\_B\_i}}$$

Wie oben beschrieben, wird MTTR_B_i vorzugsweise vereinfachend gemäß der Vorschrift

$$MTTR\_B\_i = MRT\_B\_i + MTD\_B\_i$$

berechnet, wobei MRT_B_i der Soll-MRT-Wert und MTD_B_i der Soll-MTD-Wert für den Bestandteil B_i sind.

Die obigen Rechenvorschriften werden zum einen angewendet, um den Soll-MTBF-Wert und den Soll-MTTR-Wert einer Funktionsgruppe F_j aus den Soll-MTBF-Werten und den Soll-MTTR-Werten der instandhaltungs-intensiven Bauteilgruppen dieser Funktionsgruppe F_j zu berechnen. Dann fungiert F_j als das System der Rechenvorschrift. Zum anderen werden die Rechenvorschriften angewendet, um den vorherzusagenden MTBF-Wert und den vorherzusagenden MTTR-Wert einer Anlage aus den Soll-MTBF-Werten und den Soll-MTTR-Werten der instandhaltungs-intensiven Funktionsgruppen dieser Anlage zu berechnen. Dann fungiert die Anlage als das System der Rechenvorschrift.

Vorzugsweise werden gemäß den oben beschriebenen Rechenvorschriften zunächst der Soll-MTBF-Wert und der Soll-MTTR-Wert jeder instandhaltungs-intensiven Funktionsgruppe aus den Soll-MTBF-Werten und Soll-MTTR-Werten der instandhaltungs-intensiven Bauteilgruppen berechnet. Anschließend wird gemäß den gleichen Rechenvorschriften der MTBF-Wert und der MTTR-Wert einer angebotenen Anlage aus den Soll-MTBF-Werten und den Soll-MTTR-Werten der instandhaltungs-intensiven Funktionsgruppen dieser Anlage berechnet. Diese Berechnung wird für jede angebotene Anlage durchgeführt. Dadurch wird für jede angebotene Anlage eine Vorhersage für den MTBF-Wert und eine für den MTTR-Wert bestimmt.

Der zeitliche Aufwand Inst_j für geplante Instandhaltungsmaßnahmen an der Funktionsgruppe F_j wird wie folgt berechnet:

$$Inst\_j = \sum_{k=1}^{m} M\_k * Inst\_k$$

Hierbei sind Bg_1, ..., Bg_m die unterschiedlichen Bauteilgruppen der Funktionsgruppe F_j. M_1, ..., M_m gibt an, wie oft diese Bauteilgruppen in der Funktionsgruppe F_j auftreten, und für k=1,...,m bezeichnet Inst_k die Instandhaltungskosten für ein Exemplar der Bauteilgruppe Bg_k. Entsprechend wird der zeitliche Aufwand Inst für geplante Instandhaltungsmaßnahmen an der Anlage

Entsprechend werden die Kosten KB_j für Bauteile, die für die in der Wartungszeit T_w durchgeführten Maßnahmen an der Funktionsgruppe F_j benötigt werden, gemäß der Rechenvorschrift

$$KB\_j = \sum_{k=1}^{m} M\_k * KB\_k$$

berechnet. Hierbei bezeichnet für k=1,...,m KB_k die Kosten für Bauteile, die für die Wartung eines Exemplars der Bauteilgruppe Bg_k benötigt werden.

Wie oben dargelegt, wird die geplante Lebensdauer der Anlage erfaßt. Für jeden gekennzeichneten Bestandteil wird dessen geplante Lebensdauer erfaßt. Falls die geplante Lebensdauer eines Bestandteils geringer als die geplante Lebensdauer der Anlage ist, wird die geplante Lebensdauer eines Bestandteils bei der Erfassung des Soll-MTBF-Wertes dieses Bestandteils berücksichtigt. Beispielsweise ist der Soll-MTBF-Wert gleich dem Quotienten aus geplanter Lebensdauer und geplanter Anzahl der Ausfälle während der Lebensdauer. Außerdem ist eine Wiederbeschaffung des Bestandteils während der Lebensdauer der Anlage erforderlich, so daß die Kosten zur Wiederbeschaffung des Bestandteils in die Wartungskosten der Anlage einfließen.

Vorzugsweise unterbreiten verschiedene Anlagen-Hersteller Angebote für Fertigungs-Anlagen. Für jede angebotene Anlage werden die oben beschriebenen Ausfall- und Wartungsdaten erfaßt. Die Vorrichtung erzeugt eine Gegenüberstellung der angebotenen Anlagen. Für jede Anlage sagt die Vorrichtung einen MTBF-Wert und einen MTTR-Wert vorher. Vorzugsweise hat diese Gegenüberstellung die Form einer Tabelle mit einer Zeile pro angebotener Anlage. Die Tabelle hat folgende Spalten:

- eine für die vorhergesagten MTBF-Werte der Anlagen,

- eine für die vorhergesagten MTTR-Werte der Anlagen,

- eine für den zeitlichen Aufwand für geplante Instandhaltungsmaßnahmen, die pro Zeiteinheit an einer Anlage jeweils durchgeführt werden, z. B. in [h/Jahr],

- geplanten Kosten für Bauteile, die für die Wartung der Anlage jeweils benötigt werden, z. B. in [€/Jahr],

- geplanten Kosten für Verbrauchsstoffe, die für die Wartung der Anlage jeweils benötigt werden, z. B. in [€/Jahr].

Vorzugsweise wird mindestens eine der angebotenen Anlagen u. a. aufgrund der Daten, die in der Gegenüberstellung angezeigt werden, ausgewählt. Mit jedem Hersteller oder Lieferanten einer ausgewählten Anlage wird ein Vertrag geschlossen. In diesem Vertrag werden u. a. folgende Werte vereinbart:

- der Soll-MTBF-Wert jeder instandhaltungs-intensiven Bauteilgruppe der Anlage und

- der Soll-MTTR-Wert jeder instandhaltungs-intensiven Bauteilgruppe der Anlage.

Möglich ist, zusätzlich folgende Werte vertraglich zu vereinbaren:

- den mit der erfindungsgemäßen Vorrichtung vorhergesagte MTBF-Wert der Anlage und

- den vorhergesagte MTTR-Wert der Anlage.

Die vorhergesagten und vereinbarten Werte der Anlage, insbesondere der Soll-MTBF-Wert und der Soll-MTTR-Wert jeder instandhaltungs-intensiven Bauteilgruppe, werden im laufenden Betrieb der Anlage überprüft. Hierzu wird protokolliert, zu welchem Zeitpunkt welche instandhaltungs-intensive Bauteilgruppe ausgefallen ist und wie lange die Beseitigung dieses Ausfalls dauerte. Um die tatsächliche Reparaturzeit einer ausgefallenen Bauteilgruppe zu bestimmen und um diese mit dem Soll-MTTR-Wert für die Bauteilgruppe vergleichen zu können, werden nur die Zeiten für die eigentliche Reparatur und die Zeitspannen zwischen dem Ende der reinen Reparaturzeit bis zur wiedererlangten Betriebsbereitschaft der Anlage, also der tatsächliche MRT-Wert und der tatsächliche MTD-Wert der Bauteilgruppe, ermittelt und addiert.

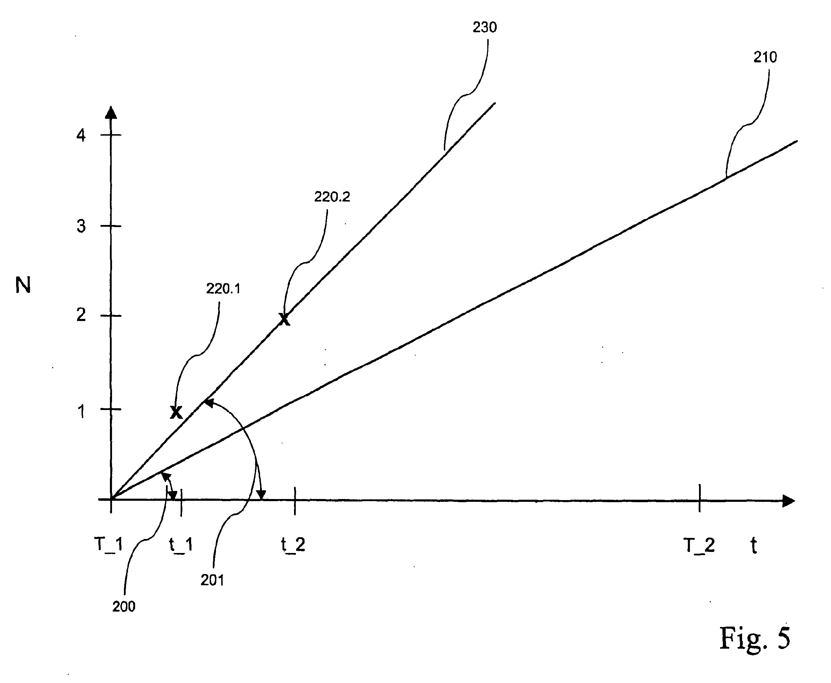

Fig. 5 illustriert beispielhaft einen Vergleich des Soll-MTBF-Werts mit dem tatsächlichen MTBF-Wert einer Bauteilgruppe Bg. Auf der x-Achse ist die Zeit eingetragen. Hierbei werden nur Ausfälle in der Phase Ph_2 der Zufallsausfälle berücksichtigt, weswegen die Zeitpunkte T_1 und T_2 aus Fig. 4 eingetragen sind. Auf der y-Achse wird die Anzahl N der Ausfälle eingetragen.

Die Gerade 210 zeigt das Soll-Ausfallverhalten der Bauteilgruppe Bg und resultiert aus dem Soll-MTBF-Wert. Die Gerade 210 läuft durch den Ursprung, und ihre Steigung wird so bestimmt, daß der Tangens des Winkels 200 gleich der als zeitlich konstant angenommenen Soll-Ausfallrate λ_Bg der Bauteilgruppe Bg ist. Für die Steigung m_210 der Geraden 210 gilt also:

```
m_210 = tan(200) = λ_Bg = 1 / MTBF_Bg
```

Zu den Zeitpunkten t_1 und t_2 treten die ersten beiden Ausfälle der Bauteilgruppe in der Phase Ph_2 auf. Daher werden die beiden Punkte 220.1 und 220.2 eingetragen. Bis zum Zeitpunkt t_2 sind zwei Ausfälle aufgetreten, daher ist der y-Wert gleich zwei. Die Gerade 230 wird durch den Ursprung und den Punkt 220.2 gelegt. Die Steigung m_230 der Gerade 230 und damit die momentane tatsächliche Ausfallrate λ_Bg(t_2) in der Zeitspanne von T_1 bis t_2 wird so bestimmt, daß gilt:

```
m_230 = tan(201) = λ_Bg(t_2) = 1 / MTBF_Bg(t_2)
```

Vorzugsweise wird der Quotient m_230 / m_210 mit einem vorgegebenen Schwellwert verglichen. Übersteigt der Quotient diesen Schwellwert, so werden geeignete Maßnahmen ausgelöst, um die Anzahl der Ausfälle an der Bauteilgruppe Bg zu reduzieren.

Das oben beschriebene Verfahren wird während der gesamten Phase Ph_2 durchgeführt. Laufend wird der Quotient aus der Steigung der Gerade für das tatsächliche Ausfallverhalten und der Steigung m_210 der Geraden 210 ermittelt und mit dem Schwellwert verglichen. Dadurch fungiert die Überwachung als Frühwarnsystem, um schnell und mit geringem Aufwand diejenigen Bauteilgruppen zu identifizieren, die häufiger als geplant ausfallen. Die tatsächlichen MTBF-Werte und MTTR-Werte der instandhaltungs-intensiven Bestandteile werden an den Hersteller der überwachten Anlage übermittelt. Bauteilgruppen mit zu hohen MTBF- oder MTTR_Werte werden dann beispielsweise konstruktiven Verbesserungen unterzogen, oder die Einsatzbedingungen der Anlage werden geändert, damit derartige Bestandteile in Zukunft seltener ausfallen.

Dieses Ausführungsbeispiel der Erfindung liefert damit ein Hilfsmittel, um diejenigen Bestandteile zu identifizieren, für die konstruktive Verbesserungen erforderlich und zweckmäßig sind, nämlich die instandhaltungs-intensiven und häufiger als dem Soll-MTBF-Wert entsprechend ausfallenden Bestandteile.

Bezugszeichen- und Symbolliste

| Zeichen | Bedeutung |
|---------|-----------|
| 10 | Netzwerk-Zentralrechner |
| 20.1, 20.2, ... | Netzwerk-Teilnehmerrechner |
| 110.1, 110.2 | elektronische Anlagen-Liste |
| 120.1, 120.2 | generische elektronische Stückliste |
| 130.1, 130.2 | elektronische Bestandteile-Liste |
| 170 | Verknüpfungs-Software |
| 180 | Internet-Antwortprogramm |
| 190.1, 190.2, ... | Internet-Zugriffsprogramme |
| 191.1 | Tabellenkalkulationsprogramm |
| 192.1 | Schnittstellen-Programm |
| 200 | Winkel zwischen x-Achse und Soll-Ausfallverhalten |
| 201 | Winkel zwischen x-Achse und Ist-Ausfallverhalten im Zeitraum von T_1 bis t_2 |
| 220.1, 220.2 | Ausfall-Zeitpunkte |
| 230 | Ist-Ausfallverhalten im Zeitraum von T_1 bis t_2 |
| 300.1, 300.2, ... | Eingabefelder für Soll-MTBF-Werte von Bestandteilen |
| 301.1, 301.2, ... | Eingabefelder für Soll-MTTR-Werte von Bestandteilen |
| 302 | Berechnungs-Einrichtung |
| 303 | Bildschirm |
| 304 | Formular |
| 305 | "eigentliche Datenverarbeitungseinrichtung" |
| 310 | Tastatur |
| B_1, ... , B_n | instandhaltungs-intensive Bestandteile eines Systems |
| Bg_1, ..., Bg_m | instandhaltungs-intensive Bauteilgruppen einer Funktionsgruppe |
| F_j | instandhaltungs-intensive Funktionsgruppe |
| MAD | "mean administrative delay", mittlere administrative Verzugsdauer |
| MLD | "mean logistic delay", mittlere logistische Verzugsdauer |
| MRT | "mean repair time", mittlere Reparaturdauer |
| MTBF | "mean time between failure", mittlere Zeitspanne zwischen zwei Ausfällen |
| MTD | "mean technical delay", mittlere technische Verzugsdauer |
| MTTR | "mean time to repair", mittlere Zeitspanne zur Reparatur |
| Ph_1 | Phase der Frühausfälle |
| Ph_2 | Phase der Zufallsausfälle |

(fortgesetzt)

| Zeichen | Bedeutung |
|---------|-----------|
| Ph_3 | Phase der Verschleißausfälle |
| T_b | Belegungszeit |
| T_n | Nutzungszeit = Netto-Produktionszeit |
| T_o | organisatorische Ausfallzeit |
| T_s | geplante Stillstandszeit |
| T_t | technische Ausfallzeit |
| T_w | Wartungszeit |

**Patentansprüche**

1. Vorrichtung zur Reduktion von Ausfallzeiten eines technischen Systems umfassend
   eine Vorrichtung zur Bestimmung der mittleren Soll-Zeitspanne zwischen zwei Ausfällen des technischen Systems, die umfaßt:

   - eine elektronische Bestandteile-Liste (130.1, 130.2), welche alle instandhaltungs-intensiven Bestandteile des technischen Systems auflistet, wobei jeder Ausfall eines Bestandteils der Liste (130.1, 130.2) zu einem Ausfall des Systems führt,
   - eine Einrichtung zum Erfassen von Soll-MTBF-Werten für die Bestandteile der Bestandteile-Liste (130.1, 130.2),
   - eine Einrichtung zum Summieren aller Kehrwerte der für die Bestandteile der Bestandteile-Liste (130.1, 130.2) erfaßten Soll-MTBF-Werte
   - und eine Einrichtung zur Berechnung des Kehrwerts der Kehrwerte-Summe, wobei der Kehrwert der Kehrwerte-Summe die vorherzusagende mittleren Zeitspanne zwischen zwei Ausfällen eines technischen Systems ist

   eine Vorrichtung zur Bestimmung der tatsächlichen Ist-Zeitspanne zwischen zwei Ausfällen des technischen Systems und
   eine Vorrichtung zur Bestimmung der Abweichung der Ist-Zeitspanne von der Soll-Zeitspanne und
   eine Vorrichtung zur Bestimmung der Überschreitung eines Schwellwertes der Abweichung sowie
   eine Vorrichtung zur Auslösung von Maßnahmen bei Vorliegen einer Überschreitung, die geeignet sind, die Anzahl der Ausfälle zu reduzieren.

2. Vorrichtung nach Anspruch 1,
   **dadurch gekennzeichnet,**
   **daß** die Vorrichtung umfaßt:

   - eine Einrichtung zum Erfassen von Soll-MTTR-Werten für die Bestandteile der Bestandteile-Liste (130.1, 130.2),
   - und eine Einrichtung zur Vorhersage der mittleren Zeitdauer zur Fehlerbeseitigung nach einem Ausfall des technischen Systems,
   die die mittlere Zeitdauer als gewichtetes Mittel der erfaßten Soll-MTTR-Werte der Bestandteile der Bestandteile-Liste (130.1, 130.2) berechnet,

   wobei als Gewichtungsfaktoren die Kehrwerte der Soll-MTBF-Werte der Bestandteile der Bestandteile-Liste (130.1, 130.2) verwendet werden.

3. Vorrichtung nach Anspruch 2,
   **dadurch gekennzeichnet,**
   **daß** die Einrichtung zum Erfassen der Soll-MTTR-Werte umfaßt:

   - Mittel zum Erfassen von Soll-MRT-Werten und von Soll-MTD-Werten der Bestandteile der Bestandteile-Liste (130.1, 130.2) und

- Mittel zum Berechnen des Soll-MTTR-Wertes eines Bestandteils durch Summieren des Soll-MRT-Wertes und des Soll-MTD-Wertes des Bestandteils.

4. Vorrichtung nach einem der Ansprüche 1 bis 3,
   **dadurch gekennzeichnet,**
   **daß** die Vorrichtung umfaßt:

   - eine elektronische Stückliste (120.1, 120.2), die eine Zerlegung des Systems in seine Bestandteile beschreibt,
   - eine Einrichtung zum Kennzeichnen eines Bestandteils als instandhaltungs-intensiv
   - und eine Einrichtung zur Erzeugung der Bestandteile-Liste (130.1, 130.2) durch Ermitteln aller als instandhaltungs-intensiv gekennzeichneten Bestandteile der Stückliste (120.1, 120.2).

5. Vorrichtung nach einem der Ansprüche 1 bis 4,
   **dadurch gekennzeichnet,**
   **daß**

   - die Bestandteile-Liste (130.1, 130.2) für eine Kategorie technischer Systeme, welche die gleichen Funktionen ausführen, gültig ist,
   - und die Vorrichtung eine Einrichtung zur Erzeugung einer Gegenüberstellung von mehreren Systemen der Kategorie umfaßt,

   wobei die Gegenüberstellung die für jedes System vorhergesagten mittleren Zeitspannen zwischen zwei Ausfällen des Systems umfaßt.

6. Vorrichtung nach Anspruch 5,
   **dadurch gekennzeichnet,**
   **daß** die Gegenüberstellungs-Erzeugungs-Einrichtung Mittel zum Erzeugen je einer Teil-Gegenüberstellung der vorhergesagten Ausfall-Häufigkeiten für jeden Bestandteil der Bestandteile-Liste (130.1, 130.2) in den mehreren Systemen umfaßt.

7. Vorrichtung nach einem der Ansprüche 4 bis 6,
   **dadurch gekennzeichnet,**
   **daß** die elektronische Stückliste (120.1, 120.2) für eine Kategorie technischer Systeme, welche die gleichen Funktionen ausführen, gültig ist.

8. Verfahren zur Reduktion von Ausfallzeiten eines technischen Systems umfassend
   ein Verfahren zur Bestimmung der mittleren Soll-Zeitspanne zwischen zwei Ausfällen des technischen Systems, wobei eine elektronische Bestandteile-Liste (130.1, 130.2), welche die instandhaltungs-intensiven Bestandteile des technischen Systems umfaßt, vorgegeben ist, wobei jeder Ausfall eines Bestandteils der Bestandteile-Liste (130.1, 130.2) zu einem Ausfall des Systems führt,
   und das Verfahren folgende Schritte umfaßt, die unter Verwendung einer elektronischen Datenverarbeitungsanlage durchgeführt werden:

   - für jedes Bestandteil der Bestandteile-Liste (130.1, 130.2) Erfassen eines Soll-MTBF-Wertes für den Bestandteil,
   - Summieren aller Kehrwerte der für die Bestandteile der Bestandteile-Liste (130.1, 130.2) erfaßten Soll-MTBF-Werte und
   - Verwenden des Kehrwerts der Kehrwerte-Summe als vorherzusagende mittlere Zeitspanne zwischen zwei Ausfällen des technischen Systems,

   sowie
   die Bestimmung der tatsächlichen Ist-Zeitspanne zwischen zwei Ausfällen des technischen Systems und
   die Bestimmung der Abweichung der Ist-Zeitspanne von der Soll-Zeitspanne und
   die Bestimmung der Überschreitung eines Schwellwertes der Abweichung sowie
   die Auslösung von Maßnahmen bei Vorliegen einer Überschreitung, die geeignet sind, die Anzahl der Ausfälle zu reduzieren..

9. Verfahren nach Anspruch 8,

**dadurch gekennzeichnet,**
**daß** das Verfahren zusätzlich die folgenden Schritte umfaßt:

- für jedes Bestandteil der Bestandteile-Liste (130.1, 130.2) zusätzlich Erfassen eines Soll-MTTR-Wertes für den Bestandteil und
- Berechnen einer Vorhersage der mittleren Zeitspanne zur Fehlerbeseitigung im technischen System als gewichtetes Mittel der erfaßten Soll-MTTR-Werte der Bestandteile der Bestandteile-Liste (130.1, 130.2),

wobei als Gewichtungsfaktoren die Kehrwerte der Soll-MTBF-Werte der Bestandteile der Bestandteile-Liste (130.1, 130.2) verwendet werden.

10. Verfahren nach Anspruch 9,
**dadurch gekennzeichnet,**
**daß** beim Erfassen des Soll-MTTR-Wertes mindestens eines Bestandteils folgende Schritte ausgeführt werden:

- Erfassen eines Soll-MRT-Wertes und eines Soll-MTD-Wertes dieses Bestandteils und
- Verwenden der Summe aus Soll-MRT-Wert und Soll-MTD-Wert dieses Bestandteils als Soll-MTTR-Wert dieses Bestandteils.

11. Verfahren nach einem der Ansprüche 8 bis 10,
**dadurch gekennzeichnet,**
**daß**

- die Bestandteile-Liste (130.1, 130.2) für eine Kategorie technischer Systeme, welche die gleichen Funktionen ausführen, gültig ist,
- die Vorhersage für mehrere Systeme der Kategorie durchgeführt wird
- und eine Gegenüberstellung der vorhergesagten Ausfall-Häufigkeiten und Ausfallzeiten der mehreren Systeme erzeugt wird.

12. Verfahren nach Anspruch 11,
**dadurch gekennzeichnet,**
**daß** bei der Erzeugung der Gegenüberstellung
für jeden Bestandteil der Bestandteile-Liste (130.1, 130.2) eine Teil-Gegenüberstellung der vorhergesagten Ausfall-Häufigkeiten und Ausfallzeiten in den mehreren Systemen erzeugt und in die Gegenüberstellung eingefügt wird.

13. Verfahren nach einem der Ansprüche 8 bis 12,
**dadurch gekennzeichnet,**
**daß** für jeden Bestandteil der Bestandteile-Liste (130.1, 130.2)

- die tatsächlichen Zeitpunkte, an denen dieser Bestandteil ausfällt, protokolliert werden
- und mit dem erfaßten Soll-MTBF-Wert dieses Bestandteils verglichen werden.

14. Computerprogramm-Produkt, das direkt in den internen Speicher eines Computers geladen werden kann und Softwareabschnitte umfaßt, mit denen ein Verfahren nach einem der Ansprüche 8 bis 13 ausgeführt werden kann, wenn das Produkt auf einem Computer läuft.

15. Computerprogramm-Produkt, das auf einem von einem Computer lesbaren Medium gespeichert ist und das von einem Computer lesbare Programm-Mittel aufweist, die den Computer veranlassen, ein Verfahren nach einem der Ansprüche 8 bis 13 auszuführen.

Fig. 1

EP 1 959 325 A2

Fig. 2

Fig. 3

Fig. 4

EP 1 959 325 A2

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19848094 A1
- EP 1160712 A2
- EP 1146468 A2
- DE 19751273 A1

- WO 0072212 A2
- WO 0126005 A1
- US 20010023376 A1

**In der Beschreibung aufgeführte Nicht-Patentliteratur**

- Dubbel - Taschenbuch für den Maschinenbau. Springer-Verlag, 2001